(19) Europäisches Patentamt
European Patent Office
Office européen des brevets

(11) EP 4 596 090 A1

(12) EUROPEAN PATENT APPLICATION
published in accordance with Art. 153(4) EPC

(43) Date of publication:
**06.08.2025 Bulletin 2025/32**

(21) Application number: **23871596.5**

(22) Date of filing: **23.08.2023**

(51) International Patent Classification (IPC):
***B01D 61/36*** (2006.01) ***B01D 69/10*** (2006.01)
***B01D 69/12*** (2006.01) ***B01D 71/44*** (2006.01)
***B01D 71/70*** (2006.01)

(52) Cooperative Patent Classification (CPC):
**B01D 61/36; B01D 69/10; B01D 69/12; B01D 71/44; B01D 71/70**

(86) International application number:
**PCT/JP2023/030397**

(87) International publication number:
**WO 2024/070355 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 JP 2022153133**

(71) Applicant: **NITTO DENKO CORPORATION**
**Ibaraki-shi**
**Osaka 567-8680 (JP)**

(72) Inventors:
- **YANO Hikaru**
**Ibaraki-shi, Osaka 567-8680 (JP)**
- **NAKANO Takeshi**
**Ibaraki-shi, Osaka 567-8680 (JP)**
- **IKENAGA Akie**
**Ibaraki-shi, Osaka 567-8680 (JP)**
- **SUZUKI Tatsuya**
**Ibaraki-shi, Osaka 567-8680 (JP)**
- **TANAKA Akiko**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) PERVAPORATION MEMBRANE

(57) The present invention provides a new pervaporation membrane suitable for separating a volatile organic compound from an aqueous solution containing the organic compound. A pervaporation membrane 10 of the present invention includes: a separation functional layer 1; and a porous support 5 supporting the separation functional layer 1. The porous support 5 has a surface A1 facing the separation functional layer 1, the surface A1 including a plurality of opening portions H1. An average diameter L1 of the opening portions H1 is 0.5 μm or more. For the pervaporation membrane 10, a peeling strength measured by a test below is 0.15 N/20 mm or more.

Test: The pervaporation membrane 10 is cut to 20 mm in width and 150 mm in length to give a test piece. The separation functional layer 1 of the test piece is peeled off the porous support 5 of the test piece at a peel angle of 180° and a tensile speed of 300 mm/min.

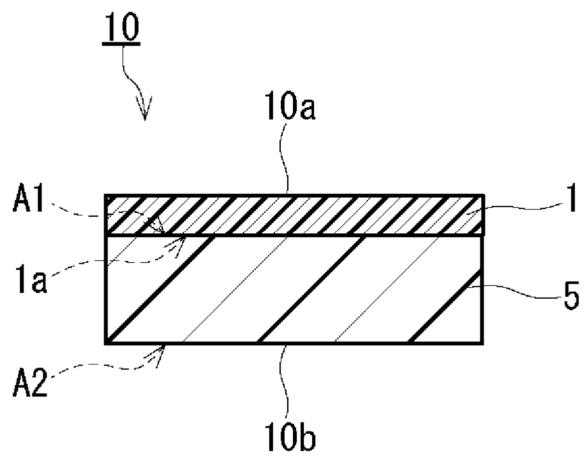

FIG.1A

EP 4 596 090 A1

**Description**

TECHNICAL FIELD

The present invention relates to a pervaporation membrane.

BACKGROUND ART

A method using fermentation by a microorganism has been known as a method for obtaining a non-petroleum valuable substance. For example, there have been developed methods for producing a volatile organic compound (a fermented product), such as an alcohol, by fermenting a carbon source, such as glucose, by using a microorganism. The fermentation of a carbon source is carried out, for example, in an aqueous solution. In this method, the fermentation by a microorganism stops in some cases when the content of the fermented product in the aqueous solution increases. For continuous production of the fermented product by a microorganism, the fermented product needs to be separated from the aqueous solution.

One example of the method for separating a volatile organic compound from an aqueous solution containing the organic compound is a pervaporation method using a pervaporation membrane. The pervaporation method is suitable for separating a volatile organic compound from an aqueous solution containing various substances. Moreover, the pervaporation method tends to be able to reduce energy consumption and carbon dioxide emissions compared to a distillation method. Patent Literature 1 discloses an example of a pervaporation membrane for a pervaporation method.

CITATION LIST

Patent Literature

Patent Literature 1: JP 2005-525224 A

SUMMARY OF INVENTION

Technical Problem

A new pervaporation membrane suitable for separating a volatile organic compound from an aqueous solution containing the organic compound has been required.

Solution to Problem

The present invention provides a pervaporation membrane including:

a separation functional layer; and
a porous support supporting the separation functional layer, wherein
the porous support has a surface A1 facing the separation functional layer, the surface A1 including a plurality of opening portions H1,
an average diameter L1 of the opening portions H1 is 0.5 μm or more, and
a peeling strength measured by a test below is 0.15 N/20 mm or more.

Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.

The present invention further provides a pervaporation membrane including:

a separation functional layer; and
a porous support in direct contact with the separation functional layer, the porous support supporting the separation functional layer, wherein
the porous support is a fibrous structure.

Advantageous Effects of Invention

The present invention can provide a new pervaporation membrane suitable for separating a volatile organic

compound from an aqueous solution containing the organic compound.

## BRIEF DESCRIPTION OF DRAWINGS

FIG. 1A is a cross-sectional view schematically showing a pervaporation membrane according to an embodiment of the present invention.
FIG. 1B is a diagram for illustrating a method for manufacturing a pervaporation membrane.
FIG. 1C is a diagram for illustrating the method for manufacturing a pervaporation membrane.
FIG. 2 is a schematic cross-sectional view showing a membrane separation device including a pervaporation membrane.
FIG. 3 is a perspective view schematically showing a modification of the membrane separation device.
FIG. 4 is a schematic configuration diagram showing an example of a membrane separation system.

## DESCRIPTION OF EMBODIMENTS

A pervaporation membrane according to a first aspect of the present invention includes:

a separation functional layer; and
a porous support supporting the separation functional layer, wherein
the porous support has a surface A1 facing the separation functional layer, the surface A1 including a plurality of opening portions H1,
an average diameter L1 of the opening portions H1 is 0.5 μm or more, and
a peeling strength measured by a test below is 0.15 N/20 mm or more.

Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.
According to a second aspect of the present invention, for example, in the pervaporation membrane according to the first aspect, the porous support has a surface A2 facing the surface A1, the surface A2 including a plurality of opening portions H2, and an average diameter L2 of the opening portions H2 is 0.5 μm or more.
According to a third aspect of the present invention, for example, in the pervaporation membrane according to the first or second aspect, the porous support is a fibrous structure.
A pervaporation membrane according to a fourth aspect of the present invention includes:

a separation functional layer; and
a porous support in direct contact with the separation functional layer, the porous support supporting the separation functional layer, wherein
the porous support is a fibrous structure.

According to a fifth aspect of the present invention, for example, in the pervaporation membrane according to the third or fourth aspect, the fibrous structure is a non-woven fabric or a stretched porous membrane including fibrils.
According to a sixth aspect of the present invention, for example, in the pervaporation membrane according to any one of the first to fifth aspects, a gas permeability of the porous support in a thickness direction is 50 seconds/100 mL or less as expressed by an air permeation rate determined according to Method B (Gurley method) of gas permeability measurement specified in JIS L 1096: 2010.
According to a seventh aspect of the present invention, for example, in the pervaporation membrane according to any one of the first to sixth aspects, the separation functional layer includes a silicone resin.
According to an eighth aspect of the present invention, for example, in the pervaporation membrane according to the seventh aspect,

the porous support has a surface A1 facing the separation functional layer, the surface A1 being treated with a molecular bonding agent, and
the molecular bonding agent includes a compound including a reactive group F1 capable of reacting with the surface A1 and a reactive group F2 capable of reacting with the silicone resin included in the separation functional layer.

According to a ninth aspect of the present invention, for example, in the pervaporation membrane according to

any one of the first to sixth aspects, the separation functional layer includes a (meth)acrylic resin.

According to a tenth aspect of the present invention, for example, in the pervaporation membrane according to any one of the first to ninth aspects, the separation functional layer includes a filler.

According to an eleventh aspect of the present invention, for example, in the pervaporation membrane according to the tenth aspect, the filler includes at least one selected from the group consisting of zeolite and silica.

According to a twelfth aspect of the present invention, for example, the pervaporation membrane according to any one of the first to eleventh aspects is configured to be used to separate a volatile organic compound from an aqueous solution containing the organic compound.

According to a thirteenth aspect of the present invention, for example, in the pervaporation membrane according to the twelfth aspect, the organic compound is a fermented product generated by a microorganism.

The present invention will be described below in detail. The following description is not intended to limit the present invention to a specific embodiment.

<Embodiment of pervaporation membrane>

As shown in FIG. 1A, a pervaporation membrane 10 of the present embodiment includes a separation functional layer 1 and a porous support 5 supporting the separation functional layer 1. The separation functional layer 1 has, for example, a surface 1a in direct contact with the porous support 5 and a surface exposed to the outside of the pervaporation membrane 10. The pervaporation membrane 10 is composed, for example, only of the separation functional layer 1 and the porous support 5. The pervaporation membrane 10 is typically a membrane (separation membrane) preferentially permeable to a volatile organic compound C in an aqueous solution S.

The porous support 5 has surfaces A1 and A2 facing each other. The surface A1 faces the separation functional layer 1; specifically, the surface A1 faces the separation functional layer 1 side. The surface A1 is, for example, in direct contact with the separation functional layer 1. The surface A1 includes a plurality of opening portions H1. The opening portion H1 is connected to, for example, a pore included in the porous support 5. In the case where the porous support 5 is a fibrous structure, the opening portion H1 is typically a gap between fibers on the surface A1.

An average diameter L1 of the plurality of opening portions H1 is 0.5 μm or more, and may be preferably 1 μm or more, 2 μm or more, 5 μm or more, 8 μm or more, 10 μm or more, 13 μm or more, or even 15 μm or more. The upper limit of the average diameter L1 is, for example, but not particularly limited to, 10 mm or less, and may be 1 mm or less, 100 μm or less, or even 50 μm or less.

The average diameter L1 can be determined by the following method. First, the surface A1 of the porous support 5 is observed using a scanning electron microscope (SEM). The observation of the surface A1 is conducted, for example, for the porous support 5 taken out of the pervaporation membrane 10. The observation of the surface A1 may be conducted for the porous support 5 yet to be used for production of the pervaporation membrane 10.

The magnification and the observation area of the SEM for the observation of the surface A1 can be adjusted as appropriate depending on the size of the opening portion H1. The magnification of the SEM is, for example, 50x, 5,000x, 20,000x, etc. In one example, in the case where the porous support 5 is a non-woven fabric and the opening portions H1 are large, the opening portions H1 are determined within an area larger than 2.0 mm in length and 2.5 mm in width of a SEM image obtained using a SEM adjusted at approximately 50-fold magnification. In the case where the porous support 5 includes a fine porous layer and the opening portions H1 are small, the opening portions H1 are determined within an area larger than 4.8 μm in length and 6.0 μm in width of a SEM image obtained using a SEM adjusted at approximately 20,000-fold magnification. Specifically, the opening portions H1 are determined by converting the SEM image into a binary image of the opening portions H1 and the other portion (non-opening portion) than the opening portions H1 using software (e.g., Image J). The area (opening area h) of each of the determined opening portions H1 is calculated by image processing. A diameter of a circle having the same area as the calculated area of the opening portion H1 is considered a diameter d of the opening portion H1. The average diameter L1 can be determined from the obtained results by the following equation. As seen in the following equation, the average diameter L1 is a weighted average of diameter d with weights given by opening area h.

$$\text{Average diameter L1 } (\mu m) = \Sigma\{\text{Opening area h } (\mu m^2) \times \text{Diameter d } (\mu m)\} / \Sigma\text{Opening area h } (\mu m^2)$$

An opening rate R1 of the surface A1 is not limited to a particular value, and is, for example, 70% or less, and may be 50% or less, or even 30% or less. The opening rate R1 may be 1 to 30%. The opening rate R1 can be measured by the following method. First, the surface 5a of the porous support 5 is observed with a SEM by the method described above for the average diameter L1 so as to determine the opening portion H1. The percentage of the total area of the opening portions H1 in the SEM image can be considered the opening rate R1.

The surface A2 of the porous support 5 includes, for example, a plurality of opening portions H2, as does the

surface A1. The opening portion H2 is connected, for example, to a pore included in the porous support 5. In the case where the porous support 5 is a fibrous structure, the opening portion H2 is typically a gap between fibers on the surface A2.

An average diameter L2 of the plurality of opening portions H2 is 0.5 μm or more, and may be preferably 1 μm or more, 2 μm or more, 5 μm or more, 8 μm or more, 10 μm or more, 13 μm or more, or even 15 μm or more. The upper limit of the average diameter L2 is, for example, but not particularly limited to, 10 mm or less, and may be 1 mm or less, 100 μm or less, or even 50 μm or less. The average diameter L2 can be measured by the method described above for the average diameter L1.

The average diameter L2 may be comparable to the average diameter L1, or may be greater than the average diameter L1. In one example, a ratio L2/L1 of the average diameter L2 (μm) to the average diameter L1 (μm) is, for example, 0.3 to 30. The ratio L2/L1 is, for example, 30 or less, and may be 25 or less, 20 or less, 15 or less, 10 or less, 5 or less, or even 3 or less. The ratio L2/L1 is, for example, 0.3 or more, and may be 0.5 or more, or even 0.8 or more.

An opening rate R2 of the surface A2 is not limited to a particular value, and is, for example, 70% or less, and may be 50% or less, or even 30% or less. The opening rate R2 may be 1 to 30%. The opening rate R2 can be measured by the method described above for the opening rate R1. The opening rate R2 of the surface A2 may be comparable to the opening rate R1, or may be greater than the opening rate R1. In one example, the absolute value $|R2 - R1|$ of the difference between the opening rate R2 (%) and the opening rate R1 (%) is, for example, 30% or less, and may be 20% or less, 10% or less, or even 5% or less.

For the pervaporation membrane 10 of the present embodiment, a peeling strength measured by a test below is 0.15 N/20 mm or more.

Test: The pervaporation membrane 10 is cut to 20 mm in width and 150 mm in length to give a test piece. The separation functional layer 1 of the test piece is peeled off the porous support 5 of the test piece at a peel angle of 180° and a tensile speed of 300 mm/min.

The test above is carried out specifically by the following method. First, the pervaporation membrane 10 to be evaluated is cut to 20 mm in width and 150 mm in length to give a test piece. Then, the entire surface of the porous support 5 of the test piece is stacked on an acrylic test plate with a double-faced tape (e.g., No.5000NS manufactured by Nitto Denko Corporation) therebetween, and a 2 kg roller is moved back and forth once to press-bond these. The acrylic test plate has, for example, dimensions of 150 mm in width and 150 mm in length. Then, in a direction from one end of the test piece toward the other end, the separation functional layer 1 is pulled by hand to be peeled off the porous support 5 by 90 mm only. A commercially-available tensile tester is used to grip the peeled portion of the separation functional layer 1 and a portion near the one end of the test piece with chucks, and the rest of the separation functional layer 1 is peeled off the porous support 5 at a peel angle of 180° and a tensile speed of 300 mm/min. The average of peel force during the peeling is determined as the peeling strength. For the tensile tester, an initial chuck-to-chuck distance is 150 mm. The test is carried out in an atmosphere at 25°C.

In the above test, if the separation functional layer 1 is so soft that it is difficult to directly grip the separation functional layer 1 with chucks, the following method where an evaluation sheet is used may be performed. First, the pervaporation membrane 10 to be evaluated is cut to 20 mm in width and 150 mm in length to give a test piece. The entire surface of the separation functional layer 1 of the test piece is stacked on an evaluation sheet, and a 2 kg roller is moved back and forth once to press-bond them. Then, the entire surface of the porous support 5 of the test piece is stacked on an acrylic test plate with a double-faced tape (e.g., No.5000NS manufactured by Nitto Denko Corporation) therebetween, and a 2 kg roller is moved back and forth once to press-bond these. The separation functional layer 1 is peeled off the porous support 5 by the same method as the above one, except that the evaluation sheet, instead of separation functional layer 1, is gripped with chucks. The average of peel force during the peeling can be determined as the peeling strength. The evaluation sheet is not limited to a particular one as long as not peeling off the separation functional layer 1 during the test. In one example, when the separation functional layer 1 includes a (meth)acrylic resin, a polyethylene terephthalate (PET) film can be used as the evaluation sheet.

The peeling strength is preferably 0.2 N/20 mm or more, and may be 0.3 N/20 mm or more, 0.4 N/20 mm or more, 0.5 N/20 mm or more, 0.6 N/20 mm or more, 0.7 N/20 mm or more, 0.8 N/20 mm or more, 0.9 N/20 mm or more, or even 1.0 N/20 mm or more. The upper limit of the peeling strength is, for example, but not particularly limited to, 20 N/20 mm, and may be 10 N/20 mm.

In the test above, the separation functional layer 1 is sometimes fixed sufficiently firmly to the porous support 5 and thus cannot be peeled off the porous support 5 by hand; if an attempt is made to forcibly peel the separation functional layer 1 off, the separation functional layer 1 can be broken. It is inferred that this phenomenon is attributable to the fact that the above peeling strength (N/20 mm) is larger than a strength at break (N/20 mm) of the separation functional layer 1. Therefore, in the above case, the peeling strength can be considered a value equal to or greater than the strength at break separately determined for the separation functional layer 1 (i.e., the peeling strength (N/20 mm) ≥ the strength at break (N/20 mm)).

The strength at break of the separation functional layer 1 can be determined by the following method. First, a layer having the same composition and the same thickness as those of the separation functional layer 1 included in the

pervaporation membrane 10 is formed on a release liner, and the release liner is removed to give a free-standing membrane of the separation functional layer 1. Then, the free-standing membrane of the separation functional layer 1 is cut to 20 mm in width and 60 mm in length to give a test piece. The test piece is set on a commercially-available tensile tester, and a tensile test is performed under the following conditions.

•Measurement conditions

Temperature: 25°C
Tensile direction: the longitudinal direction of the test piece
Initial chuck-to-chuck distance: 20 mm
Tensile speed: 300 mm/min

A strength B ($N/mm^2$) at the time of break of the test piece is determined by the tensile test. The strength at break (N/20 mm) can be calculated from the strength B ($N/mm^2$), the thickness (mm) of the separation functional layer, and the width (20 mm) of the test piece by the following equation.

Strength at break (N/20 mm) = Strength B ($N/mm^2$) × Thickness (mm) × 20 × (1/20)

(Separation functional layer)

The separation functional layer 1 is a layer, for example, preferentially permeable to the organic compound C in the above aqueous solution S, and is typically a dense layer (non-porous layer) in which no pores can be confirmed with a scanning electron microscope (SEM) at 5000-fold magnification.

In a preferred embodiment of the present invention, the separation functional layer 1 includes a silicone resin. The silicone resin is formed, for example, from a silicone resin composition. The silicone resin may be formed from a condensation type silicone resin composition, but is preferably formed from an addition type silicone resin composition. The silicone resin may be formed from an UV-curable silicone resin composition. The addition type silicone resin composition can be cured with little metal species (particularly tin) that can promote hydrolysis of the silicone resin. Therefore, the separation functional layer 1 including the silicone resin formed from the addition type silicone resin composition includes little metal species that can promote hydrolysis of the silicone resin, and tends to have high durability against the aqueous solution S.

[Addition type silicone resin composition]

The addition type silicone resin composition is a silicone resin composition curable by an addition reaction. The addition type silicone resin composition includes, for example, a polyorganosiloxane P1 having an alkenyl group and a polyorganosiloxane P2 having a hydrosilyl (SiH) group. The addition type silicone resin composition preferably further includes a curing catalyst (hydrosilylation catalyst). The addition type silicone resin composition may be one produced by adding a curing catalyst to a commercially-available silicone resin composition. The addition type silicone resin composition may be free of a curing catalyst.

The silicone resin can be formed, for example, by subjecting the addition type silicone resin composition to a heating treatment by which a reaction (hydrosilylation reaction) between the alkenyl group in the polyorganosiloxane P1 and the hydrosilyl group in the polyorganosiloxane P2 proceeds. In this hydrosilylation reaction, the polyorganosiloxane P2 functions as a crosslinking agent.

The alkenyl group of the polyorganosiloxane P1 is, for example, a vinyl group or a hexenyl group. The number of alkenyl groups in the polyorganosiloxane P1 is, for example, two or more. The alkenyl group is located, for example, at a terminal of the polyorganosiloxane P1.

The polyorganosiloxane P1 is, for example, one formed by introducing an alkenyl group to a polyorganosiloxane, which is, for example, a polyalkylalkylsiloxane, such as polydimethylsiloxane, polydiethylsiloxane, or polymethylethylsiloxane; a polyalkylarylsiloxane; or poly(dimethylsiloxane-diethylsiloxane).

A weight-average molecular weight of the polyorganosiloxane P1 is, for example, 1,000 or more, and may be 10,000 or more, 100,000 or more, 200,000 or more, 300,000 or more, or even 400,000 or more. The larger the weight-average molecular weight of the polyorganosiloxane P1 is, the better separation properties the pervaporation membrane 10 is likely to have. The upper limit of the weight-average molecular weight of the polyorganosiloxane P1 is, for example, but not particularly limited to, 1,000,000.

The number of hydrosilyl groups in the polyorganosiloxane P2 is, for example, two or more. The hydrosilyl group

may be located at a terminal of the polyorganosiloxane P2, or may be included in a main chain of the polyorganosiloxane P2.

Examples of the polyorganosiloxane P2 include polymethyl hydrogen siloxane, poly(dimethylsiloxane-methyl hydrogen siloxane), and hydrosilyl-terminated polydimethylsiloxane.

A weight-average molecular weight of the polyorganosiloxane P2 is, for example, 100 or more, and may be 10,000 or more. The larger the weight-average molecular weight of the polyorganosiloxane P2 is, the more likely the separation properties of the pervaporation membrane 10 is to increase. The upper limit of the weight-average molecular weight of the polyorganosiloxane P2 is, for example, but not particularly limited to, 1,000,000.

A weight ratio P2/P1 of the polyorganosiloxane P2 to the polyorganosiloxane P1 is, for example, 500 wt% or less, and may be 100 wt% or less, 50 wt% or less, 20 wt% or less, 10 wt% or less, or even 5 wt% or less. The lower limit of the weight ratio P2/P1 is, for example, 0.01 wt% or more.

The curing catalyst is, for example, a platinum-based catalyst. In other words, the addition type silicone resin composition may include a curing catalyst including platinum. Specific examples of the platinum-based catalyst include chloroplatinic acid, an olefin complex of platinum, and an olefin complex of chloroplatinic acid. As described above, the addition type silicone resin composition may be free of a curing catalyst.

The addition type silicone resin composition may include a compound from which a catalytically active species that catalyzes an addition reaction is produced by irradiation with an active energy ray, such as ultraviolet (UV). An addition reaction can proceed, for example, by UV irradiation of the addition type silicone resin composition including such a compound.

The addition type silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The addition type silicone resin composition may be of a solvent-free type which is substantially free of a solvent, such as an organic solvent.

[Condensation type silicone resin composition]

The condensation type silicone resin composition is a silicone resin composition curable by a condensation reaction. The condensation type silicone resin composition includes, for example, a polyorganosiloxane P3 having a silanol (SiOH) group and a silane compound P4 having a functional group, such as an alkoxy group, an alkenyloxy group, an acyloxy group, an amino group, a ketoxime group, or an amide group. The condensation type silicone resin composition may further include a curing catalyst, or may be free of a curing catalyst. The condensation type silicone resin composition may be one produced by adding a curing catalyst to a commercially-available silicone resin composition.

The silicone resin can be formed, for example, by subjecting the condensation type silicone resin composition to a heating treatment by which a reaction (condensation reaction) between the silanol group in the polyorganosiloxane P3 and the above functional group in the silane compound P4 proceeds. In this condensation reaction, the silane compound P4 functions as a crosslinking agent.

The number of silanol groups in the polyorganosiloxane P3 is, for example, two or more. The silanol group is located, for example, at a terminal of the polyorganosiloxane P3. An alkyl group, such as a methyl group or an ethyl group, a phenyl group, or the like may be introduced as a substituent of a side chain to the polyorganosiloxane P3.

The polyorganosiloxane P3 is, for example, one formed by introducing a silanol group to any of the polyorganosiloxanes described for the polyorganosiloxane P1.

A weight-average molecular weight of the polyorganosiloxane P3 is, for example, 1,000 or more, and may be 10,000 or more, 100,000 or more, 200,000 or more, 300,000 or more, or even 400,000 or more. The upper limit of the weight-average molecular weight of the polyorganosiloxane P3 is, for example, but not particularly limited to, 1,000,000.

As described above, the silane compound P4 has a functional group, such as an alkoxy group, an alkenyloxy group, an acyloxy group, an amino group, a ketoxime group, or an amide group. Examples of the alkoxy group include a methoxy group and an ethoxy group. Examples of the alkenyloxy group include an isopropenyloxy group. Examples of the acyloxy group include an acetoxy group. Examples of the amino group include a dimethylamino group, a diethylamino group, and an ethylmethylamino group. Examples of the ketoxime group include an acetoxime group and a methylethylketoxime group. Examples of the amide group include an acetamide group, an N-methylacetamide group, and an N-ethylacetamide group. The number of functional groups in the silane compound P4 is, for example, two or more. Specifically, the silane compound P4 preferably includes an alkoxysilyl group as the alkoxy group.

The silane compound P4 may be a low-molecular compound having a molecular weight of around 1000 or less, or may be a polymer compound having a polysiloxane framework.

The curing catalyst is, for example, a tin-based catalyst. Examples of the tin-based catalyst include organic tin

catalysts, such as dibutyltin dilaurate, dibutyltin diacetate, and dibutyltin dioctate.

The condensation type silicone resin composition may further include an organic solvent in addition to the above components. Examples of the organic solvent include those described above for the addition type silicone resin composition. The condensation type silicone resin composition may be of a solvent-free type which is free of a solvent, such as an organic solvent.

[UV-curable silicone resin composition]

The UV-curable silicone resin composition is a silicone resin composition curable by ultraviolet (UV) irradiation. A curing reaction of the UV-curable silicone resin composition proceeds, for example, through radical polymerization, radical addition, ionic polymerization, or the like. The UV-curable silicone resin composition whose curing reaction proceeds through radical polymerization includes, for example, a polyorganosiloxane P5 including a double bond (specifically a carbon-carbon double bond) in an alkenyl group, an acryloyl group, or the like. The UV-curable silicone resin composition whose curing reaction proceeds through radical addition includes, for example, the polyorganosiloxane P5 including a double bond (specifically a carbon-carbon double bond) in an alkenyl group, an acryloyl group, or the like and a compound P6 having a functional group, such as a thiol group, capable of radical addition. The UV-curable silicone resin composition whose curing reaction proceeds through ionic polymerization includes, for example, a polyorganosiloxane P7 having a functional group, such as an epoxy group, capable of ionic polymerization and a compound from which a catalytically active species that catalyzes ionic polymerization is produced by UV irradiation.

By UV irradiation of the UV-curable silicone resin composition whose curing reaction proceeds through radical polymerization, for example, a radical polymerization reaction proceeds between the double bonds each included in the alkenyl group, the acryloyl group, or the like in the polyorganosiloxane P5, and thereby the silicone resin can be formed.

The alkenyl group of the polyorganosiloxane P5 is, for example, a vinyl group or a hexenyl group. The number of alkenyl groups in the polyorganosiloxane P5 is, for example, two or more. The alkenyl group is located, for example, at a terminal of the polyorganosiloxane P5. An alkyl group, such as a methyl group or an ethyl group, a phenyl group, or the like may be introduced as a substituent of a side chain to the polyorganosiloxane P5.

The polyorganosiloxane P5 is, for example, one formed by introducing a substituent, such as an alkenyl group or an acryloyl group, including a double bond to any of the polyorganosiloxanes described for the polyorganosiloxane P1.

A weight-average molecular weight of the polyorganosiloxane P5 is, for example, 1,000 or more, and may be 10,000 or more, 100,000 or more, 200,000 or more, 300,000 or more, or even 400,000 or more. The upper limit of the weight-average molecular weight of the polyorganosiloxane P5 is, for example, but not particularly limited to, 1,000,000.

By UV irradiation of the UV-curable silicone resin composition whose curing reaction proceeds through radical polymerization, for example, radical addition of the functional group capable of radical addition and included in the compound P6 to the double bond included in the alkenyl group, the acryloyl group, or the like in the polyorganosiloxane P5 occurs. Thereby a radical addition reaction proceeds, and the silicone resin can be formed.

Examples of the functional group capable of radical addition and included in the compound P6 include a thiol group and an alkylthiol group. Examples of the alkylthiol group include a mercaptomethyl group and a mercaptoethyl group. The number of functional groups capable of radical addition and included in the compound P6 is, for example, two or more.

The compound P6 may be a polyorganosiloxane including the functional group capable of radical addition. The above functional group is located, for example, at a terminal of the polyorganosiloxane. An alkyl group, such as a methyl group or an ethyl group, a phenyl group, or the like may be introduced as a substituent of a side chain to the polyorganosiloxane.

The compound P6 is, for example, one formed by introducing a functional group, such as a thiol group, capable of radical addition to any of the polyorganosiloxanes described for the polyorganosiloxane P1.

A weight-average molecular weight of the compound P6 is, for example, 1,000 or more, and may be 10,000 or more, 100,000 or more, 200,000 or more, 300,000 or more, or even 400,000 or more. The upper limit of the weight-average molecular weight of the compound P6 is, for example, but not particularly limited to, 1,000,000.

By UV irradiation of the UV-curable silicone resin composition whose curing reaction proceeds through ionic polymerization, for example, a catalytically active species that catalyzes ionic polymerization is produced, and an ionic polymerization reaction proceeds between the functional groups each capable of ionic polymerization and included in the polyorganosiloxane P7. The silicone resin can be formed thereby.

Examples of the functional group capable of ionic polymerization and included in the polyorganosiloxane P7 include an epoxy group. Examples of a substituent including an epoxy group include an epoxy group itself, a glycidyl group, and a glycidyloxypropyl group. The number of functional groups capable of ionic polymerization and included in the polyorganosiloxane P7 is, for example, two or more. The functional group capable of ionic polymerization is located, for example, at a terminal of the polyorganosiloxane P7. An alkyl group, such as a methyl group or an ethyl group, a phenyl group, or the like may be introduced as a substituent of a side chain to the polyorganosiloxane P7.

The polyorganosiloxane P7 is, for example, one formed by introducing a functional group, such as an epoxy group, capable of ionic polymerization to any of the polyorganosiloxanes described for the polyorganosiloxane P1.

A weight-average molecular weight of the polyorganosiloxane P7 is, for example, 1,000 or more, and may be 10,000 or more, 100,000 or more, 200,000 or more, 300,000 or more, or even 400,000 or more. The upper limit of the weight-average molecular weight of the polyorganosiloxane P7 is, for example, but not particularly limited to, 1,000,000.

The UV-curable silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The UV-curable silicone resin composition may be of a solvent-free type which is substantially free of a solvent, such as an organic solvent.

The separation functional layer 1 may include the silicone resin as its main component, or may be substantially composed only of the silicone resin. The term "main component" means a component having a largest content in the separation functional layer 1 by weight.

In another preferred embodiment of the present invention, the separation functional layer 1 includes a (meth) acrylic resin. The (meth)acrylic resin is formed, for example, from a (meth)acrylic resin composition including: a monomer group including a (meth)acrylic monomer; and/or a (meth)acrylic polymer. The (meth)acrylic resin composition may be UV-curable or heat-curable.

The (meth)acrylic monomer included in the monomer group is, for example, an alkyl (meth)acrylate. The term "(meth)acrylate" herein means an acrylate and/or a methacrylate.

An alkyl group included in the alkyl (meth)acrylate is, for example, but not particularly limited to, a linear, branched, or cyclic alkyl group having 2 to 14 carbon atoms.

The alkyl (meth)acrylate is, for example, an acrylic acid alkyl ester having an alkyl group having 2 to 14 carbon atoms, and is preferably an acrylic acid alkyl ester having an alkyl group having 4 to 9 carbon atoms. Examples of the acrylic acid alkyl esters include n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate.

The alkyl (meth)acrylate may be, for example, a methacrylic acid alkyl ester having an alkyl group having 2 to 14 carbon atoms, and may be preferably a methacrylic acid alkyl ester having an alkyl group having 2 to 10 carbon atoms. Examples of the methacrylic acid alkyl esters include ethyl methacrylate, propyl methacrylate, isopropyl methacrylate, n-butyl methacrylate, isobutyl methacrylate, s-butyl methacrylate, t-butyl methacrylate, 2-ethylhexyl methacrylate, cyclohexyl methacrylate, bornyl methacrylate, and isobornyl methacrylate.

One of the above alkyl (meth)acrylates can be used alone, or two or more of the above alkyl (meth)acrylates can be used in combination. A content of the alkyl (meth)acrylate in the monomer group is, for example, but not particularly limited to, 70 to 100 wt%, and is preferably 85 to 99 wt%, more preferably 87 to 99 wt%.

The monomer group may further include a copolymerizable monomer copolymerizable with the alkyl (meth) acrylate. Examples of the copolymerizable monomer include: carboxyl-including monomers, such as acrylic acid, methacrylic acid, carboxyethyl (meth)acrylate, carboxypentyl (meth)acrylate, itaconic acid, maleic acid, fumaric acid, and crotonic acid; an alkyl (meth)acrylate including an alkyl group having 1 carbon atom or 15 or more carbon atoms; (meth)acrylic acid aryl esters, such as phenyl (meth)acrylate; vinyl esters, such as vinyl acetate and vinyl propionate; styrene monomers, such as styrene; epoxy-including monomers, such as glycidyl (meth)acrylate and methyl glycidyl (meth)acrylate; hydroxyl-including (meth)acrylates, such as 2-hydroxyethyl acrylate and 2-hydroxypropyl acrylate; nitrogen-including monomers, such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylolpropane(meth)acrylamide, (meth)acryloyl morpholine, aminoethyl (meth)acrylate, N,N-dimethylaminoethyl (meth)acrylate, and t-butyl aminoethyl (meth)acrylate; alkoxy-including monomers, such as methoxyethyl (meth)acrylate and ethoxyethyl (meth) acrylate; cyano-including monomers, such as acrylonitrile and methacrylonitrile; functional monomers, such as 2-methacryloyloxyethyl isocyanate; olefin monomers, such as ethylene, propylene, isoprene, butadiene, and isobutylene; vinyl ether monomers, such as vinyl ethers; halogen-including monomers, such as vinyl chloride; vinyl-including heterocyclic compounds, such as N-vinylpyrrolidone, N-(1-methylvinyl)pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, and N-vinylmorpholine; N-vinyl carboxamide; maleimide monomers, such as N-cyclohexylmaleimide, N-isopropylmaleimide, N-laurylmaleimide, and N-phenylmaleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide monomers, such as N-(meth)acryloyl oxymethylene succinimide, N-(meth)acryloyl-6-oxyhexamethylene succinimide, and N-(meth)acryloyl-8-oxyoctamethylene succinimide; sulfonic acid-including monomers, such as styrene sulfonic acid, allylsulfonic acid, 2-(meth)acrylamide-2-methylpropanesulfonic acid, (meth)acrylamide propanesulfonic acid, sulfopropyl (meth)acrylate, and (meth)acryloyloxy naphthalenesulfonic acid; phosphate-including monomers;

glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; heterocycle- or halogen-including acrylic acid ester monomers, such as tetrahydrofurfuryl (meth)acrylate and fluorine (meth)acrylate; and compounds having a reactive unsaturated double bond, such as allyl (meth)acrylate and vinyl (meth)acrylate.

The (meth)acrylic polymer may be a polymer of the above monomer group. The (meth)acrylic polymer preferably includes a structural unit derived from an alkyl (meth)acrylate as its main component. Examples of the alkyl (meth)acrylate are those described above. A content of the structural unit derived from the alkyl (meth)acrylate in the (meth)acrylic polymer is, for example, but not particularly limited to, 70 to 100 wt%, preferably 85 to 99 wt%, more preferably 87 to 99 wt%.

The (meth)acrylic polymer may further include a structural unit derived from a copolymerizable monomer copolymerizable with the alkyl (meth)acrylate. Examples of the copolymerizable monomer are those described above.

The (meth)acrylic resin composition may further include an additive and an organic solvent in addition to the monomer group and/or the (meth)acrylic polymer. Examples of the additive include a polymerization initiator, a crosslinking agent, and a later-described filler. Examples of the organic solvent include those described above for the silicone resin composition. The (meth)acrylic resin composition may be of a solvent-free type which is substantially free of a solvent, such as an organic solvent.

When the (meth)acrylic resin composition is UV-curable, the resin composition preferably includes a photopolymerization initiator as an additive.

Examples of the photopolymerization initiator include: benzoin ethers, such as benzoin methylether, benzoin isopropyl ether, and benzyl dimethyl ketal; substituted benzoinethers, such as anisolemethyl ether; substituted acetophenones, such as 2,2-diethoxyacetophenone and 2,2-dimethoxy-2-phenylacetophenone; a-hydroxyalkylphenone, such as 1-hydroxycyclohexyl-phenylketone; substituted $\alpha$-ketols, such as 2-methyl-2-hydroxypropiophenone; aromatic sulfonylchlorides, such as 2-naphthalenesulfonylchloride; photoactive oximes, such as 1-phenyl-1,1-propanedione-2-(o-ethoxycarbonyl)-oxime; benzophenone-based compounds, such as benzophenone, benzoylbenzoic acid, benzoylmethyl benzoate, 4-phenylbenzophenone, hydroxybenzophenone, acrylated benzophenone, 4-benzoyl-4'-methyldiphenyl sulfide, and 3,3',4,4'-tetra(t-butylperoxycarbonyl)benzophenone; thioxanthone-based compounds, such as thioxanthone, 2-chlorothioxanthone, 2-methylthioxanthone, isopropylthioxanthone, 2,4-diisopropylthioxanthone, and 2,4-diethylthioxantone; triazine-based compounds, such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-piperonyl-4,6-bis(trichloromethyl)-s-triazine, 2,4-bis(trichloromethyl)-6-styryl-s-triazine, 2-(naphth-1-yl)-4,6-bis(trichloromethyl)-s-triazine, 2-(4-methoxy-naphth-1-yl)-4,6-bis(trichloromethyl)-s-triazine, 2,4-trichloromethyl-(piperonyl)-6-triazine, and 2,4-trichloromethyl-(4'-methoxystyryl)-6-triazine; oxime ester-based compounds, such as 1,2-octanedione,1-[4-(phenylthio)-,2-(O-benzoyloxime)] and O-(acetyl)-N-(1-phenyl-2-oxo-2-(4'-methoxy-naphthyl)ethylidene)hydroxylamine; phosphine-based compounds, such as bis(2,4,6-trimethylbenzoyl)phenylphosphine oxide and 2,4,6-trimethylbenzoyl diphenylphosphine oxide; quinone-based compounds, such as 9,10-phenanthrenequinone, camphorquinone, and ethylanthraquinone; borate-based compounds; carbazole-based compounds; imidazole-based compounds; and titanocene-based compounds. The (meth)acrylic resin composition may include one photopolymerization initiator or may include two or more photopolymerization initiators.

An amount of the photopolymerization initiator in the (meth)acrylic resin composition is, for example, 0.02 to 10 parts by weight with respect to 100 parts by weight of the monomer group, and may be 0.05 to 5 parts by weight.

When the (meth)acrylic resin composition is UV-curable, the resin composition preferably includes a crosslinking agent as an additive. The crosslinking agent is, for example, a polyfunctional monomer having two or more polymerizable functional groups per molecule.

Examples of the polyfunctional monomer include: (mono or poly)alkylene glycol di(meth)acrylate, such as ethylene glycol di(meth)acrylate, diethylene glycol di(meth)acrylate, triethylene glycol di(meth)acrylate, trimethylolpropane tri(meth)acrylate, tetraethylene glycol di(meth)acrylate, and propylene glycol di(meth)acrylate; esters of (meth) acrylic acid and a polyhydric alcohol, such as neopentyl glycol di(meth)acrylate, 1,6-hexanediol di(meth)acrylate, pentaerythritol di(meth)acrylate, trimethylolpropane (meth)acrylate, pentaerythritol tri(meth)acrylate, and dipentaerythritol hexa(meth)acrylate; and polyfunctional vinyl compounds, such as divinylbenzene.

An amount of the crosslinking agent in the (meth)acrylic resin composition is, for example, 5 parts by weight or less with respect to 100 parts by weight of the monomer group, and may be 3 parts by weight or less, 2 parts by weight or less, 1 part by weight or less, or even 0.5 parts by weight or less. The lower limit of the amount is, for example, 0.01 parts by weight or more, or even 0.05 parts by weight or more.

The separation functional layer 1 may include the (meth)acrylic resin as its main component, or may be substantially composed only of the (meth)acrylic resin.

The separation functional layer 1 may include: a matrix including a resin (the silicone resin or the (meth)acrylic resin); and a filler dispersed in the matrix. In this embodiment, in the separation functional layer 1, all or a portion of particles of the filler is embedded in the matrix. In the matrix, all particles of the filler may be spaced from each other, or a portion of the

particles of the filler may aggregate.

The filler includes, for example, an inorganic material, such as zeolite, silica, or bentonite. The filler includes, for example, at least one selected from the group consisting of zeolite and silica, and preferably includes silica. The filler including silica tends to have higher resistance to hydrolysis than that of the filler including zeolite. Moreover, in the case of the filler including silica, the resin (particularly the silicone resin) included in the matrix tends to have a higher free volume. The high free volume of the resin tends to enhance the separation properties of the pervaporation membrane 10, particularly, the separation factor $\alpha$ for BuOH with respect to water. With the use of the filler, the viscosity of the resin composition (particularly the (meth)acrylic resin composition) can be adjusted as appropriate, and therefore a resin composition suitable for application is likely to be prepared.

Silica commonly means silicon dioxide. The filler may be a silica filler including silicon dioxide as its main component. The silica filler does not have, for example, a crystal structure. The silica filler can be produced, for example, by causing silicon metal to react with oxygen. The silica filler can also be produced by a sol-gel process, sedimentation, an aqueous solution wet method, or the like. The filler may be substantially composed only of silicon dioxide.

Note that the filler may include zeolite. Examples of the zeolite included in the filler include a high-silica zeolite having a high ratio of silica to alumina and an alumina-free silicalite. As the filler including a high-silica zeolite can be used HSZ (registered trademark) manufactured by Tosoh Corporation, HiSiv (registered trademark) manufactured by UNION SHOWA K.K., USKY manufactured by UNION SHOWA K.K., or Zeoal (registered trademark) manufactured by Nakamura Choukou Co., Ltd.

The filler, particularly the silica filler, is free of, for example, a micropore having a diameter of 2 nm or less. However, the filler may have a mesopore having a diameter of 2 nm to 50 nm and a macropore having a diameter of 50 nm or more.

The filler, particularly the silica filler, preferably has a surface modified with a modifying group including a hydrocarbon group. In other words, the filler is preferably surface-treated with a modifying group. The surface-modified filler is highly dispersible in the resin and is suitable for inhibiting occurrence of a crack, for example, in production of the separation functional layer 1.

The number of carbon atoms in the hydrocarbon group included in the modifying group is, for example, but not particularly limited to, 1 to 25. The number of carbon atoms in the hydrocarbon group may be 5 or less. The hydrocarbon group may be linear, branched, or cyclic. Examples of the hydrocarbon group include alkyl groups, such as a methyl group and an ethyl group.

The modifying group may further include a silicon atom, and the hydrocarbon group may be bonded to the silicon atom. The modifying group may include at least one selected from the group consisting of an organosilyl group and a polyorganosiloxane group. Examples of the organosilyl group include: triorganosilyl groups, such as a trimethylsilyl group; and diorganosilyl groups, such as a dimethylsilyl group. Examples of the polyorganosiloxane group include a dimethylpolysiloxane group.

The surface modification with the modifying group can be performed, for example, by a reaction between a hydroxyl group at the surface of the filler and a known silane coupling agent.

Specific examples of the surface-modified silica filler include those manufactured by Nippon Aerosil Co., Ltd. under the product names of "AEROSIL (registered trademark) RX series" (RX 50, RX 200, RX 300, etc.), "AEROSIL (registered trademark) RY series" (RY 50, RY 200, RY 200 S, etc.), "AEROSIL (registered trademark) NY series" (NY 50, NY 50 L, etc.), "AEROSIL (registered trademark) NAX series" (NAX 50, etc.), and "AEROSIL (registered trademark) R series" (R 972, R 974, R 976, etc.).

The filler is preferably sufficiently surface-modified with the modifying group in terms of dispersibility in the resin. In other words, the number of hydroxyl groups on the surface of the filler is preferably small. Whether the filler is sufficiently surface-modified with the modifying group can be judged, for example, from the pH of a dispersion of the filler or a Hansen solubility parameter (HSP value) of the filler. Incidentally, the Hansen solubility parameter is a solubility parameter resulting from division of the solubility parameter introduced by Hildebrand into three components, namely, a dispersion term $\delta D$, a polarity term $\delta P$, and a hydrogen bonding term $\delta H$. The details of the Hansen solubility parameter are disclosed in, for example, "Hansen Solubility Parameters; A Users Handbook (CRC Press, 2007)".

In the present embodiment, the pH measured by a test below for a dispersion of the filler is, for example, 4.0 to 9.0, and may be 6.0 to 8.0. The pH of the dispersion is preferably neutral (around pH 7.0). When the pH of the dispersion is neutral, it can be said that the filler is sufficiently surface-modified with the modifying group and the number of hydroxyl groups on the surface is small. Test: Water, methanol, and the filler are mixed to prepare a dispersion, and pH of the dispersion is measured. A content of the filler in the dispersion is 4 wt%, a weight ratio between water and methanol in the dispersion is 1:1, and the dispersion has a temperature of 25°C.

The filler has, for example, a particle shape. The term "particle shape" herein includes a spherical shape, an elliptical shape, a flake shape, and a fiber shape. The filler may be powdery. An average particle diameter of the filler is, for example, but not particularly limited to, 50 $\mu$m or less, and may be 20 $\mu$m or less, 10 $\mu$m or less, 1 $\mu$m or less, 500 nm or less, 100 nm or less, 50 nm or less, 30 nm or less, or even 20 nm or less. The separation functional layer 1 including the filler

having a small average particle diameter is likely to distribute a stress applied to the separation functional layer 1, and tends to have strong adhesion to the porous support 5. This tendency is remarkable particularly for the separation functional layer 1 including the silicone resin. Note that in the case of the separation functional layer 1 including the (meth)acrylic resin, addition of the filler can actually decrease the adhesion between the separation functional layer 1 and the porous support 5 in some cases. In this case, for example, using a small amount of the filler having an average particle diameter of 20 nm or less is likely to sufficiently secure the adhesion between the separation functional layer 1 and the porous support 5 and make it possible to adjust the viscosity of the (meth)acrylic resin composition for production of the separation functional layer 1 as appropriate. The lower limit of the average particle diameter of the filler is, for example, but not particularly limited to, 1 nm, and may be 5 nm.

The average particle diameter of the filler can be determined, for example, by the following method. First, a cross-section of the separation functional layer 1 is observed using a transmission electron microscope. The area of one of the particles of the filler in the resulting electron microscope image is calculated by image processing. The diameter of a circle having the same area as the calculated area is considered the particle diameter (the diameter of the particle) of the particle of the filler. The particle diameter was calculated for any number (at least 50) of the particles of the filler, and the average of the calculated values was considered the average particle diameter of the filler.

The content of the filler in the separation functional layer 1 is, for example, 1 wt% or more, and may be 5 wt% or more, 10 wt% or more, 20 wt% or more, 30 wt% or more, or even 40 wt% or more. The upper limit of the content of the filler in the separation functional layer 1 is, for example, but not particularly limited to, 70 wt% or less, and may be less than 50 wt%. When the content of the filler is less than 50 wt%, it is likely that occurrence of a defect, such as a crack, can be sufficiently inhibited in production of the separation functional layer 1. A content of the matrix in the separation functional layer 1 is, for example, but not particularly limited to, 30 wt% to 99 wt%, and may be 30 wt% to 90 wt%.

A surface area D1 of the filler per weight of the matrix is, for example, but not particularly limited to, 5 $m^2/g$ or more, and may be 10 $m^2/g$ or more, 20 $m^2/g$ or more, 30 $m^2/g$ or more, 40 $m^2/g$ or more, or even 50 $m^2/g$ or more. The upper limit of the surface area D1 is, for example, but not particularly limited to, 100 $m^2/g$ or less. The surface area D1 can be calculated by the following equation using a BET specific surface area D2 ($m^2/g$) determined for the filler by nitrogen gas adsorption, a weight W1 (g) of the matrix included in the separation functional layer 1, and a weight W2 (g) of the filler included in the separation functional layer 1.

$$D1\ (m^2/g) = D2\ (m^2/g) \times W2\ (g)/W1\ (g)$$

A thickness of the separation functional layer 1 is, for example, 200 μm or less, and may be 100 μm or less, or even 80 μm or less. The thickness of the separation functional layer 1 may be 1.0 μm or more, 10 μm or more, or even 30 μm or more.

(Porous support)

In the present embodiment, the porous support 5 includes, for example, only a main portion and is free of a fine porous layer. The porous support 5 preferably is a fibrous structure. Examples of the fibrous structure include a woven fabric, a non-woven fabric, and a stretched porous membrane including fibrils. The fibrous structure is typically a non-woven fabric or a stretched porous membrane.

When the fibrous structure is a woven fabric or a non-woven fabric, examples of a fiber included in the fibrous structure include: natural fibers, such as wood pulp, cotton, and hemp (e.g., Manila hemp); and chemical fibers (synthetic fibers), such as polyester fiber, rayon, vinylon, acetate fiber, polyvinyl alcohol (PVA) fiber, polyamide fiber, polyolefin fiber, and polyurethane fiber. The porous support 5 is, for example, a non-woven fabric formed of polyester fiber.

When the fibrous structure is a stretched porous membrane, the fibrous structure preferably includes a fluorine resin. Examples of the fluorine resin include polytetrafluoroethylene (PTFE), an ethylene-tetrafluoroethylene copolymer (ETFE), polyvinylidene fluoride (PVDF), a perfluoroalkoxy fluorine resin (PFA), and a tetrafluoroethylene-hexafluoropropylene copolymer (FEP). The fluorine resin is preferably PTFE.

In one example, the stretched porous PTFE membrane is formed by stretching a cast membrane or a paste extrusion including PTFE particles. The stretched porous PTFE membrane is formed of fine PTFE fibrils and can have a node in which PTFE is more highly aggregated than in the fibrils.

In the present embodiment, the separation functional layer 1 is, for example, in direct contact with the fibrous structure (specifically the non-woven fabric or the stretched porous membrane). In another aspect, the present invention provides the pervaporation membrane 10 including:

the separation functional layer 1; and
the porous support 5 in direct contact with the separation functional layer 1 and supporting the separation functional

layer 1, wherein
the porous support 5 is the fibrous structure.

When the separation functional layer 1 includes the (meth)acrylic resin and is in direct contact with the porous support 5 being the fibrous structure, a portion of the separation functional layer 1 enters the opening portion H1 of the porous support 5 during operation of a membrane separation device including the pervaporation membrane 10 to decrease the flux of a permeated fluid having permeated through the pervaporation membrane 10. However, according to studies by the present inventors, even when the separation functional layer 1 includes the (meth)acrylic resin, using the stretched porous membrane as the porous support 5 makes it difficult for the separation functional layer 1 to enter the opening portion H1 and is likely to sufficiently reduce a decrease of the flux of a permeated fluid.

The porous support 5 (main portion) has, for example, an average pore diameter of 1 μm to 50 μm. A thickness of the porous support 5 is, for example, but not particularly limited to, 10 μm or more, and may be 50 μm or more, or even 100 μm or more. The thickness of the porous support 5 is, for example, 300 μm or less, and may be 200 μm or less.

In the present embodiment, the porous support 5 tends to have a high air permeability by itself because of the large average diameter L1 of the opening portions H1 of the surface A1. In one example, a gas permeability of the porous support 5 in a thickness direction is, for example, 50 seconds/100 mL or less as expressed by an air permeation rate (Gurley permeability) determined according to Method B (Gurley method) of gas permeability measurement specified in JIS L 1096: 2010, and may be 30 seconds/100 mL or less, 10 seconds/100 mL or less, or even 5 seconds/100 mL or less. The lower limit of the Gurley permeability of the porous support 5 is not limited to a particular value, and is, for example, 0.1 seconds/100 mL.

The surface A1 of the porous support 5 may be treated with a molecular bonding agent. The molecular bonding agent includes a molecular bonding compound (hereinafter referred to as "compound C1") and, if necessary, a solvent such as an organic solvent or water. The compound C1 includes a reactive group F1 capable of reacting with the surface A1 of the porous support 5 and a reactive group F2 capable of reacting with the resin (particularly the silicone resin) included in the separation functional layer 1. The reactive group F2 may be capable of reacting not only with the silicone resin but also with the surface A1 of the porous support 5.

The reactive group F1 is, for example, at least one selected from the group consisting of an amino group, an azide group, a mercapto group, an isocyanate group, an ureido group, and an epoxy group, and is typically an azide group. The reactive group F2 is, for example, at least one selected from the group consisting of a silanol group and a group G from which a silanol group is generated through a hydrolysis reaction. A specific example of the group G is an alkoxysilyl group.

The compound C1 is represented, for example, by the following formula (1).

$$R^A\text{-}Z\text{-}R^B \qquad (1)$$

In the formula (1), $R^A$ represents the reactive group F1 or a monovalent substituent having one or more reactive groups F1, $R^B$ represents the reactive group F2, and Z represents a divalent organic group.

In the formula (1), examples of Z include an optionally substituted alkylene group having 1 to 20 carbon atoms, an optionally substituted alkenylene group having 2 to 20 carbon atoms, an optionally substituted alkynylene group having 2 to 20 carbon atoms, and an optionally substituted arylene group having 6 to 20 carbon atoms.

Examples of the alkylene group having 1 to 20 carbon atoms include a methylene group, an ethylene group, a propylene group, a trimethylene group, a tetramethylene group, a pentamethylene group, and a hexamethylene group. The alkylene group having 1 to 20 carbon atoms is preferably a methylene group, an ethylene group, or a propylene group, and is more preferably a propylene group. Examples of the alkenylene group having 2 to 20 carbon atoms include a vinylene group, a propenylene group, a butenylene group, and a pentenylene group. Examples of the alkynylene group having 2 to 20 carbon atoms include an ethynylene group and a propynylene group. Examples of the arylene group having 6 to 20 carbon atoms include an o-phenylene group, an m-phenylene group, a p-phenylene group, a 2,6-naphthylene group, and a 1,5-naphthylene group.

Examples of the substituent that the above alkylene group, alkenylene group, and alkynylene group may have include: halogen atoms, such as a fluorine atom and a chlorine atom; alkoxy groups, such as a methoxy group and an ethoxy group; alkylthio groups, such as a methylthio group and an ethylthio group; and alkoxycarbonyl groups, such as a methoxycarbonyl group and an ethoxycarbonyl group.

Examples of the substituent that the above arylene group may have include: a cyano group; a nitro group; halogen atoms, such as a fluorine atom, a chlorine atom, and a bromine atom; alkyl groups, such as a methyl group and an ethyl group; alkoxy groups, such as a methoxy group and an ethoxy group; and alkylthio groups, such as a methylthio group and an ethylthio group.

The above substituent may be bonded to any position in a group such as the alkylene group, the alkenylene group, the alkynylene group, or the arylene group. A plurality of the above substituents may be bonded to one element or two or more elements in a group such as the alkylene group, the alkenylene group, the alkynylene group, or the arylene

group.

Examples of $R^A$ include groups represented by the following formulae (2) to (4).

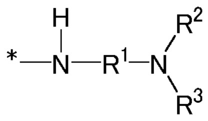

(2)

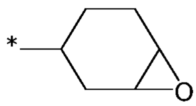

(3)

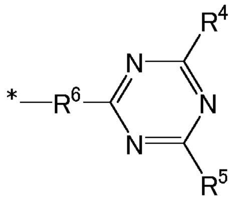

(4)

In the formulae (2) to (4), * represents a bond with Z in the formula (1). The symbol $R^1$ represents a divalent hydrocarbon group having 1 to 10 carbon atoms. The symbols $R^2$ and $R^3$ each independently represent a hydrogen atom or a hydrocarbon group having 1 to 20 carbon atoms. The symbols $R^4$ and $R^5$ each independently represent the reactive group F1 or a group represented by the above formula (2). In the case where $R^4$ and $R^5$ are each a group represented by the formula (2), * in the formula (2) represents a bond with a carbon atom in a triazine ring in the formula (4). The symbol $R^6$ represents a single bond or a divalent group represented by -N($R^7$)-. The symbol $R^7$ represents a hydrogen atom or a hydrocarbon group having 1 to 20 carbon atoms.

In the formula (2), $R^1$ is preferably a divalent hydrocarbon group having 2 to 6 carbon atoms. Examples of $R^1$ include an alkylene group having 1 to 10 carbon atoms and an arylene group. Specific example of $R^1$ include: alkylene groups, such as an ethylene group or a trimethylene group; and arylene groups, such as an o-phenylene group, an m-phenylene group, and a p-phenylene group.

In the formula (2), $R^2$ and $R^3$ are preferably each independently a hydrogen atom or a hydrocarbon group having 1 to 10 carbon atoms. Examples of $R^2$ and $R^3$ include an alkyl group, an alkynyl group, and an aryl group each having 1 to 20 carbon atoms. Specific examples of $R^2$ and $R^3$ include: alkyl groups, such as a methyl group, an ethyl group, an n-propyl group, an isopropyl group, an n-butyl group, a sec-butyl group, an isobutyl group, a t-butyl group, an n-pentyl group, an n-hexyl group, an n-heptyl group, an n-octyl group, an n-nonyl group, and an n-decyl group; alkenyl groups, such as a vinyl group, a 1-propenyl group, a 2-propenyl group, an isopropenyl group, a 3-butenyl group, a 4-pentenyl group, and a 5-hexenyl group; alkynyl groups, such as an ethynyl group, a propargyl group, and a butynyl group; and aryl groups, such as a phenyl group, a 1-naphthyl group, and a 2-naphthyl group.

In the formula (4), $R^4$ and $R^5$ preferably represent the same reactive group F1.

In the formula (4), $R^6$ represents a single bond or a divalent group represented by -N($R^7$)-. Examples of the hydrocarbon group represented by $R^7$ include those described above as the hydrocarbon groups represented by $R^2$ and $R^3$. The symbol $R^6$ preferably represents -NH-.

Of the groups represented by the above formulae (2) to (4), $R^A$ is preferably a group represented by the formula (4), more preferably a group represented by the formula (4), where $R^4$ or $R^5$ is an azide group or a group represented by the above formula (2).

The symbol $R^A$ is, for example, a group represented by the following formula (5).

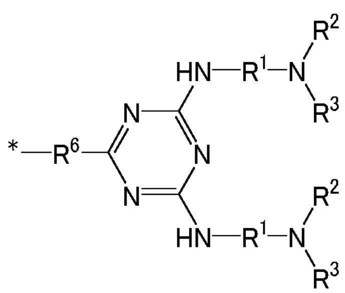

(5)

In the formula (5), * represents the bond to Z in the formula (1). The symbols $R^1$ to $R^3$ and $R^6$ are each as described above for the formulae (2) and (4). The symbols $R^1$ to $R^3$ may be the same or may be different from each other.

In the formula (1), $R^B$ may be a group represented by the following formula (6).

$$-Si(X)_a(Y)_{3-a} \quad (6)$$

In the formula (6), X represents a hydroxy group or an alkoxy group having 1 to 10 carbon atoms, and Y represents a hydrocarbon group having 1 to 20 carbon atoms. The symbol a represents an integer of 1 to 3.

In the formula (6), X is, for example, a methoxy group, an ethoxy group, an n-propoxy group, or an isopropoxy group, and is preferably an ethoxy group. Examples of Y include those described above as the hydrocarbon groups represented by $R^2$ and $R^3$ in the formula (2).

Preferably, in $R^B$, X represents a hydroxy group or an alkoxy group having 1 to 10 carbon atoms and a is 3. More preferably, in $R^B$, X represents a hydroxy group or an ethoxy group and a is 3.

Examples of the compound C1 where $R^A$ is an amino group include 3-aminopropyltrimethoxysilane, 3-aminopropyltriethoxysilane, 3-aminopropyldimethoxymethylsilane, 3-aminopropyldiethoxymethylsilane, [3-(N,N-dimethylamino)propyl]trimethoxysilane, [3-(phenylamino)propyl]trimethoxysilane, trimethyl[3-(triethoxysilyl)propyl]ammonium chloride, and trimethyl[3-(trimethoxysilyl)propyl]ammonium chloride.

Examples of the compound C1 where $R^A$ is an azide group include (11-azideundecyl)trimethoxysilane and (11-azideundecyl)triethoxysilane.

Examples of the compound C1 where $R^A$ is a mercapto group include 3-mercaptopropyltrimethoxysilane, 3-mercaptopropyltriethoxysilane, and 3-mercaptopropyldimethoxymethylsilane.

Examples of the compound C1 where $R^A$ is an isocyanate group include 3-(trimethoxysilyl)propylisocyanate and 3-(triethoxysilyl)propylisocyanate.

Examples of the compound C1 where $R^A$ is a ureido group include 3-ureidopropyltrimethoxysilane and 3-ureidopropyltriethoxysilane.

Examples of the compound C1 where $R^A$ is an epoxy group include 3-glycidoxypropyltrimethoxysilane, 3-glycidoxypropyltriethoxysilane, 3-glycidoxypropylmethyldimethoxysilane, and 3-glycidoxypropylmethyldiethoxysilane.

Examples of the compound C1 where $R^A$ is a monovalent substituent having one or more reactive groups F1 include 3-(2-aminoethylamino)propyltrimethoxysilane, 3-(2-aminoethylamino)propyltriethoxysilane, 3-(2-aminoethylamino)propyldimethoxymethylsilane, 2-(3,4-epoxycyclohexyl)ethyltrimethoxysilane, and compounds represented by the following formulae (1-1) to (1-9).

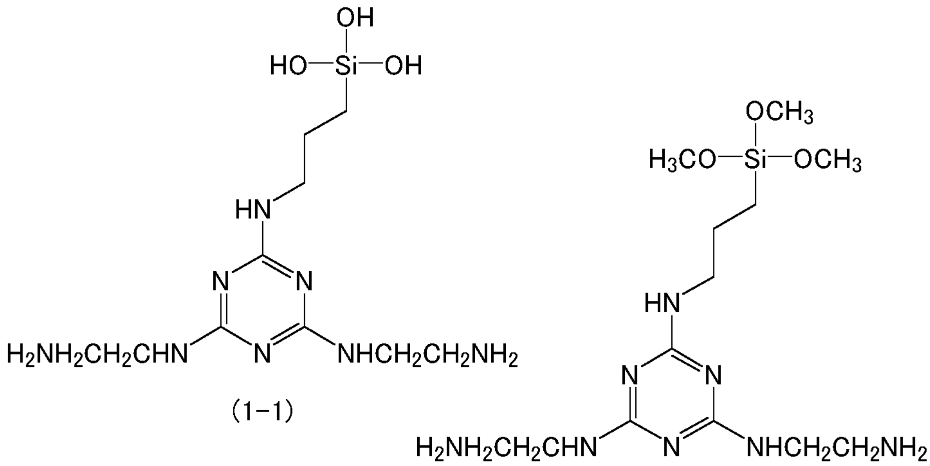

(1-1)

(1-2)

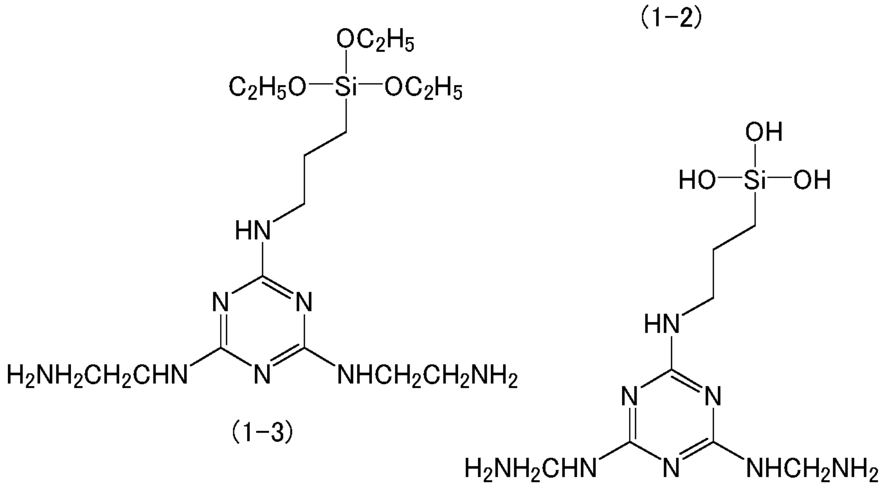

(1-3)

(1-4)

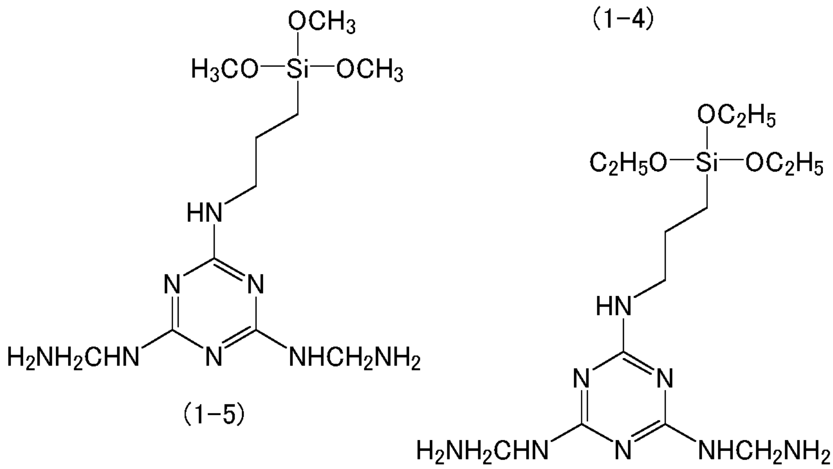

(1-5)

(1-6)

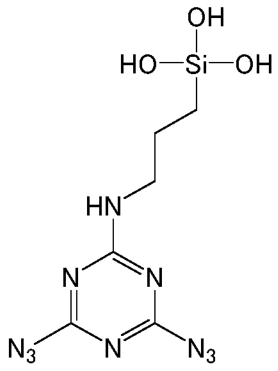

(1-7)

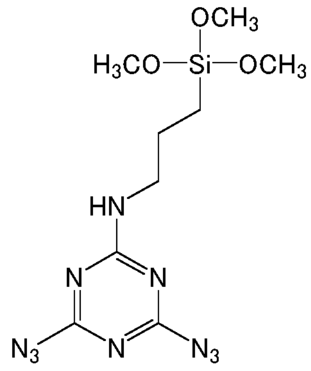

(1-8)

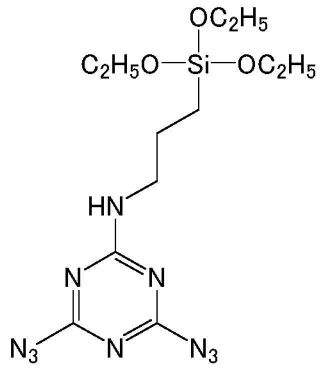

(1-9)

(1-1): N,N'-bis(2-aminoethyl)-6-(3-trihydroxysilylpropyl)amino-1,3,5-triazine-2,4-diamine
(1-2): N,N'-bis(2-aminoethyl)-6-(3-trimethoxysilylpropyl)amino-1,3,5-triazine-2,4-diamine
(1-3): N,N'-bis(2-aminoethyl)-6-(3-triethoxysilylpropyl)amino-1,3,5-triazine-2,4-diamine
(1-4): N,N'-bis(2-aminomethyl)-6-(3-trihydroxysilylpropyl)amino-1,3,5-triazine-2,4-diamine
(1-5): N,N'-bis(2-aminomethyl)-6-(3-trimethoxysilylpropyl)amino-1,3,5-triazine-2,4-diamine
(1-6): N,N'-bis(2-aminomethyl)-6-(3-triethoxysilylpropyl)amino-1,3,5-triazine-2,4-diamine
(1-7): 6-(3-trihydroxysilylpropyl)amino-1,3,5-triazine-2,4-diazide
(1-8): 6-(3-trimethoxysilylpropyl)amino-1,3,5-triazine-2,4-diazide
(1-9): 6-(3-triethoxysilylpropyl)amino-1,3,5-triazine-2,4-diazide

The compound C1 is preferably one of the compounds represented by the above formulae (1-1) to (1-9), and more preferably the compound represented by the formula (1-1) or the compound represented by the formula (1-9).

(Pervaporation membrane manufacturing method)

The pervaporation membrane 10 can be produced, for example, by the following method. First, as shown in FIG. 1B, the separation functional layer 1 is produced on a release liner 12. The separation functional layer 1 can be produced by applying the coating liquid containing a material of the separation functional layer 1 to the release liner 12 and curing the resulting coating film. The coating liquid is, for example, the silicone resin composition or the (meth)acrylic resin composition. The curing of the coating film can be performed at ordinary temperature or in a heated environment. The curing of the coating film can also be performed by irradiation with an active energy ray, such as UV. The curing of the coating film may be performed with the coating film sandwiched between two release liners 12.

In the case of curing the coating film by heating, conditions for heating the coating film are not limited to particular conditions. For example, the temperature at which the coating film is heated may be 80°C or higher, 90°C or higher, 100°C or higher, or even 120°C or higher. The higher the heating temperature for the coating film is, the more sufficiently a curing reaction of the components in the resin composition proceeds. The upper limit of the heating temperature of the coating film is, for example, but not particularly limited to, 200°C. The heating time for the coating film can be adjusted as appropriate according to the composition of the resin composition used.

The surface modification treatment may be performed for the surface 1a of the separation functional layer 1. The surface modification treatment is, for example, a corona treatment, a plasma treatment, an excimer treatment, or a frame treatment, and is preferably a corona treatment. The surface modification treatment is performed, for example, by irradiating the surface 1a of the separation functional layer 1 with an active energy ray. Specific examples of the active energy ray include electron beam, ionic beam, plasma beam, and ultraviolet.

Examples of the release liner 12 include: a film including a resin; paper; and a sheet including a metal material, such as aluminum or stainless steel. Sheets including a metal material tend to have high thermal resistance. The release liner 12 is preferably a film including a resin for high surface smoothness. Examples of a polymer included in the resin of the release liner 12 include: polyolefins, such as polyethylene, polypropylene, polybutene, polybutadiene, and polymethylpentene; polyesters, such as polyethylene terephthalate, polybutylene terephthalate, and polyethylene naphthalate; polyvinyl chloride and a vinyl chloride copolymer; polyurethane; and an ethylene-vinyl acetate copolymer. The polymer included in the resin of the release liner 12 is preferably a polyester, particularly polyethylene terephthalate.

A surface of the release liner 12 may be treated with a release treatment. The release treatment can be performed, for example, by providing a release treatment agent to the surface of the release liner 12. Examples of the release treatment agent include a silicone release treatment agent, a long-chain alkyl release treatment agent, a fluorine

release treatment agent, and a molybdenum sulfide release treatment agent. One of the release treatment agents may be used alone, or two or more of the release treatment agents may be used in combination. The release liner 12 is preferably a polyethylene terephthalate (PET) film treated by the release treatment.

A thickness of the release liner 12 is, for example, but not particularly limited to, 5 to 100 μm, and is preferably 10 to 50 μm.

Next, the above molecular bonding agent (coating liquid) including the compound C1 is prepared. The molecular bonding agent is applied to the surface A1 of the porous support 5. Consequently, the reactive groups F1 and F2 in the compound C1 react with the surface A1 of the porous support 5 (specifically, the hydroxy group at the surface A1). As a result of the reaction of the compound C1 with the surface A1, the compound C1 is bonded to the surface A1. In this state, the reactive group F2 is at the surface A1. That is, the reactive group F2 can be introduced to the surface A1 of the porous support 5 by the treatment with the molecular bonding agent.

Next, the porous support 5 is placed on the separation functional layer 1 (FIG. 1C) such that the surface A1 of the porous support 5 with the molecular bonding agent thereon is in contact with the separation functional layer 1. This is followed by heat drying. Consequently, a reaction between the reactive group F2 at the surface A1 and the resin (particularly, the silicone resin) included in the separation functional layer 1 proceeds.

The temperature at which the molecular bonding agent is dried is, for example, 40 to 150°C, and may be 60°C or higher, or even 70°C or higher. The temperature at which the molecular bonding agent is dried may be 150°C or lower, or 90°C or lower.

The heat drying of the molecular bonding agent may be performed just after the application of the molecular bonding agent to the surface A1 of the porous support 5. In that case, the step of applying and drying the molecular bonding agent may be repeated multiple times. The density of the reactive group F2 on the surface A1 can be increased thereby. In the case where the above step is repeated multiple times, different types of molecular bonding agents may be used in different steps.

In another example where the reactive group F1 is an azide group, a reaction between the reactive group F1 and the surface A1 of the porous support 5 tends to proceed easily by UV irradiation of the surface A1.

The pervaporation membrane 10 is obtained by reacting the reactive group F2 with the resin and then removing the release liner 12.

Depending on the composition of the separation functional layer 1, the adhesion between the separation functional layer 1 and the porous support 5 can be sufficiently large without performing the treatment of the surface A1 of the porous support 5 with the molecular bonding agent. For example, when the separation functional layer 1 includes the (meth)acrylic resin, the peeling strength between the separation functional layer 1 and the porous support 5 tends to be easily adjustable to 0.15 N/20 mm or more without the use of the molecular bonding agent.

(Application of pervaporation membrane)

A suitable application of the pervaporation membrane 10 of the present embodiment is, for example, to separate the volatile organic compound C from the aqueous solution S containing the organic compound C. The organic compound C is not limited to a particularly one as long as the organic compound C has volatility. An organic compound having volatility herein refers to, for example, an organic compound having a boiling point of 20°C to 260°C under the atmospheric pressure (101.325 kPa). Note that the organic compound C is, for example, one that, at high concentration in the solution, causes formation of an aqueous phase containing water as its main component and an organic phase having a higher content of organic compound C than that in the aqueous phase. The organic compound C may be one that does not cause formation of an aqueous phase and an organic phase.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, an oxygen-containing functional group, such as a hydroxyl group, a carbonyl group, an ether group, and an ester group. In the organic compound C, the number of oxygen-containing functional groups is typically one.

Examples of the organic compound C include an alcohol, a ketone, and an ester. The organic compound C is typically an alcohol. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol. Examples of the aryl alcohol include phenol.

The ketone may be a dialkyl ketone composed only of an alkyl group and a carbonyl group. Examples of the dialkyl ketone include methyl ethyl ketone (MEK) and acetone.

The ester may be an aliphatic alkyl ester composed only of an alkyl group and an ester group. Examples of the aliphatic alkyl ester include ethyl acetate.

The organic compound C is not limited to those mentioned above. The organic compound C may be an aromatic

hydrocarbon, such as benzene, toluene, or xylene.

The aqueous solution S may contain one organic compound C, or two or more organic compounds C. The content of the organic compound C in the aqueous solution S is, for example, 0.5 wt% or more, and may be 1 wt% or more, 2 wt% or more, or even 5 wt% or more. The upper limit of the content of the organic compound C is, for example, but not particularly limited to, 50 wt%.

The organic compound C may be a fermented product generated by fermentation of a carbon source by a microorganism, or may be an alcohol (bioalcohol) generated by a microorganism. That is, the aqueous solution S may be a fermented solution containing the organic compound C as the fermented product. The aqueous solution S is not limited to the fermented solution and may be a waste solution or waste water discharged from a chemical plant or the like.

The aqueous solution S may further contain an additional component, such as the microorganism by which the fermented product is generated, the carbon source, a nitrogen source, and an inorganic ion, other than water and the organic compound C. The microorganism by which the fermented product is generated is typically a bacterium. Examples of the carbon source include polysaccharides, such as starch, and monosaccharides, such as glucose.

(Properties of pervaporation membrane)

A separation factor of the pervaporation membrane 10 for the organic compound C with respect to water is not limited to a particular one. In one example, the separation factor $\alpha$ of the pervaporation membrane 10 for n-butanol (BuOH) with respect to water is, for example, 10 or more, and may be 15 or more, 20 or more, 25 or more, 30 or more, or even 40 or more. The upper limit of the separation factor $\alpha$ is, for example, 100.

The separation factor $\alpha$ can be measured by the following method. In a state where a liquid mixture consisting of BuOH and water is in contact with one surface (e.g., a principal surface 10a of the pervaporation membrane 10 on the separation functional layer side) of the pervaporation membrane 10, a space adjacent to the other surface (e.g., a principal surface 10b of the pervaporation membrane 10 on the porous support side) of the pervaporation membrane 10 is decompressed. A permeated fluid having permeated through the pervaporation membrane 10 is thus obtained. A weight ratio of water and a weight ratio of BuOH in the permeated fluid are measured. In the above process, a content of BuOH in the liquid mixture is 1.0 wt%. The liquid mixture in contact with the pervaporation membrane 10 has a temperature of 30°C. The space adjacent to the other surface of the pervaporation membrane 10 is decompressed to 15 hPa. The separation factor $\alpha$ can be calculated by the following equation. In the following equation, $X_A$ and $X_B$ are respectively a weight ratio of BuOH and that of water in the liquid mixture. The symbols $Y_A$ and $Y_B$ are respectively the weight ratio of BuOH and that of water in the permeated fluid having permeated through the pervaporation membrane 10.

$$\text{Separation factor } \alpha = (Y_A/Y_B)/(X_A/X_B)$$

Under the above measurement conditions for the separation factor $\alpha$, a flux of the BuOH having permeated through the pervaporation membrane 10 is, for example, but not particularly limited to, 0.01 (g/min/$m^2$) to 10.0 (g/min/$m^2$) (i.e., 0.0006 (kg/$m^2$/hr) to 0.6 (kg/$m^2$/hr)).

A conventional pervaporation membrane is produced by applying a coating liquid containing materials of a separation functional layer to a porous support and drying the resulting coating film. To prevent the coating liquid from penetrating the porous support, the average diameter of opening portions on a surface of the porous support tends to be adjusted to a small value, the surface facing the separation functional layer. In one example, a laminate in which a fine porous layer having a smaller average diameter of opening portions than that of a main portion, such as a fibrous structure, is disposed on the main portion is used as a porous support to produce a pervaporation membrane (e.g., Patent Literature 1).

On the other hand, in the pervaporation membrane 10 of the present embodiment, the average diameter L1 of the opening portions H1 on the surface A1 of the porous support 5 is adjusted to 0.5 μm or more. The pervaporation membrane 10 tends to have high separation performance (particularly, the flux of a permeated fluid having permeated through the pervaporation membrane) owing to the large average diameter L1 of the opening portions H1.

<Embodiment of membrane separation device>

As shown in FIG. 2, a membrane separation device 20 of the present embodiment includes the pervaporation membrane 10 and a tank 22. The tank 22 has a first chamber 23 and a second chamber 24. The first chamber 23 functions as a feed space to which a supplied fluid (specifically, the aqueous solution S described above) is supplied. The second chamber 24 functions as a permeation space to which a permeated fluid S1 is supplied. The permeated fluid S1 is obtained by allowing the aqueous solution S to permeate through the pervaporation membrane 10.

The pervaporation membrane 10 is placed in the tank 22. In the tank 22, the pervaporation membrane 10

separates the first chamber 23 and the second chamber 24 from each other. The pervaporation membrane 10 extends from one of a pair of wall surfaces of the tank 22 to the other.

The first chamber 23 has an inlet 23a and an outlet 23b. The second chamber 24 has an outlet 24a. The inlet 23a is an opening for supplying the aqueous solution S to the feed space (the first chamber 23). The outlet 24a is an opening for discharging the permeated fluid S1 from the permeation space (the second chamber 24). The outlet 23b is an opening for discharging, from the feed space (the first chamber 23), the aqueous solution S (a non-permeated fluid S2) not having permeated through the pervaporation membrane 10. The inlet 23a, the outlet 23b, and the outlet 24a are arranged, for example, in the wall surfaces of the tank 22.

The membrane separation device 20 is suitable for a flow-type (continuous-type) membrane separation method. However, the membrane separation device 20 may be used for a batch-type membrane separation method.

(Method for operating membrane separation device)

Operation of the membrane separation device 20 is performed, for example, by the following method. First, the aqueous solution S is supplied to the first chamber 23 of the membrane separation device 20 through the inlet 23a. This makes it possible to bring the aqueous solution S into contact with one surface (e.g., the principal surface 10a) of the pervaporation membrane 10.

Next, in a state where the aqueous solution S is in contact with the one surface of the pervaporation membrane 10, a space adjacent to the other surface (e.g., the principal surface 10b) of the pervaporation membrane 10 is decompressed. Specifically, the second chamber 24 is decompressed via the outlet 24a. The second chamber 24 can be decompressed, for example, by a decompression device, such as a vacuum pump. A pressure in the second chamber 24 is, for example, 50 kPa or less, and may be 20 kPa or less, 10 kPa or less, 5 kPa or less, 3 kPa or less, or even 2 kPa or less. The term "pressure" herein means absolute pressure unless otherwise noted.

By decompressing the second chamber 24, the permeated fluid S1 having a high content of the organic compound C can be obtained on the other surface side of the pervaporation membrane 10. In other words, the permeated fluid S1 is supplied to the second chamber 24. In the second chamber 24, the permeated fluid S1 is typically a gas. The permeated fluid S1 is discharged outside the membrane separation device 20 through the outlet 24a.

On the other hand, the content of the organic compound C in the aqueous solution S gradually decreases from the inlet 23a of the first chamber 23 toward the outlet 23b thereof. The aqueous solution S (the non-permeated fluid S2) processed in the first chamber 23 is discharged outside the membrane separation device 20 through the outlet 23b. The non-permeated fluid S2 is typically a liquid.

As described above, the pervaporation membrane 10 is preferentially permeable to the organic compound C contained in the aqueous solution S. Therefore, the content of the organic compound C in the permeated fluid S1 obtained by the operation of the membrane separation device 20 is higher than that in the aqueous solution S to be supplied to the membrane separation device 20.

<Modification of membrane separation device>

The membrane separation device 20 may be a spiral membrane element, a hollow fiber membrane element, a disk tube membrane element in which a plurality of pervaporation membranes are laminated, a plate-and-flame membrane element, or the like. FIG. 3 shows a spiral membrane element. A membrane separation device 25 of FIG. 3 includes a central tube 26 and a laminate 27. The laminate 27 includes the pervaporation membrane 10.

The central tube 26 has a cylindrical tube shape. The central tube 26 has a surface with a plurality of holes or slits to allow the permeated fluid S1 to flow into the central tube 26. Examples of a material of the central tube 26 include: resins, such as an acrylonitrile-butadiene-styrene copolymer resin (an ABS resin), a polyphenylene ether resin (a PPE resin), or a polysulfone resin (a PSF resin); and metals, such as stainless steel or titanium. The central tube 26 has an inner diameter in a range of, for example, 20 to 100 mm.

The laminate 27 further includes a feed-side flow passage material 28 and a permeation-side flow passage material 29 in addition to the pervaporation membrane 10. The laminate 27 is wound around the central tube 26. The membrane separation device 25 may be further provided with an exterior material (not shown).

As the feed-side flow passage material 28 and the permeation-side flow passage material 29 can be used, for example, a net, woven fabric, or knitted fabric formed of a resin, such as polyethylene, polypropylene, polyethylene terephthalate (PET), polyphenylene sulfide (PPS), or an ethylene-chlorotrifluoroethylene copolymer (ECTFE).

The membrane separation device 25 can be operated, for example, by the following method. First, the aqueous solution S is supplied to an end of the wound laminate 27. A space inside the central tube 26 is decompressed. The permeated fluid S1 having permeated through the pervaporation membrane 10 of the laminate 27 thereby moves into the central tube 26. The permeated fluid S1 is discharged outside through the central tube 26. The aqueous solution S (the non-permeated fluid S2) processed by the membrane separation device 25 is discharged outside from the other end of the

wound laminate 27.

<Embodiment of membrane separation system>

As shown in FIG. 4, a membrane separation system 100 of the present embodiment includes the membrane separation device 20 described above. The membrane separation system 100 may include the membrane separation device 25 described in FIG. 3 instead of the membrane separation device 20.

The membrane separation system 100 further includes a tank 30 in addition to the membrane separation device 20. The tank 30 stores the aqueous solution S to be supplied to the membrane separation device 20. The tank 30 may be a fermenter for generating the organic compound C by fermentation of a carbon source by a microorganism.

The membrane separation system 100 further includes an aqueous solution feed passage 70, a non-permeated fluid discharge passage 71, and a permeated fluid discharge passage 72. The aqueous solution feed passage 70 is a passage for supplying the aqueous solution S from the tank 30 to the membrane separation device 20 during operation, and is connected to an outlet 31 of the tank 30 and the inlet 23a of the membrane separation device 20. The aqueous solution feed passage 70 is provided, for example, with a pump 50 that controls a flow rate of the aqueous solution S.

The non-permeated fluid discharge passage 71 is a passage for discharging the non-permeated fluid S2 from the membrane separation device 20 during operation, and is connected to the outlet 23b of the membrane separation device 20. The non-permeated fluid discharge passage 71 is provided, for example, with a pump 51 that controls a flow rate of the non-permeated fluid S2. Note that the non-permeated fluid discharge passage 71 may not be provided with the pump 51. The non-permeated fluid discharge passage 71 may be connected to an inlet 32 of the tank 30 and configured to supply the non-permeated fluid S2 to the tank 30 during operation. That is, the non-permeated fluid discharge passage 71 may be configured to allow the non-permeated fluid S2 to be mixed with the aqueous solution S in the tank 30 and to circulate through the aqueous solution feed passage 70 and the non-permeated fluid discharge passage 71. In the case where the non-permeated fluid S2 is supplied to the tank 30, the aqueous solution S and the non-permeated fluid S2 are mixed in the tank 30 to decrease the content of the organic compound C in the aqueous solution S. In the case where the tank 30 is a fermenter, a decrease in the content of the organic compound C in the aqueous solution S can inhibit fermentation by a microorganism from stopping, thereby making it possible to produce the fermented product continuously.

The permeated fluid discharge passage 72 is a passage for discharging the permeated fluid S1 from the membrane separation device 20 during operation, and is connected to the outlet 24a of the membrane separation device 20. The permeated fluid discharge passage 72 is provided, for example, with a decompression device 52. The decompression device 52 can decompress the permeation space of the membrane separation device 20. The decompression device 52 is preferably a vacuum device, such as a vacuum pump. The vacuum pump is typically a gas transport vacuum pump, and is, for example, a reciprocating vacuum pump, a rotary vacuum pump, or the like. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the decompression device 52 may include a variable speed mechanism for changing the rotational speed, etc. An example of the variable speed mechanism is an inverter that drives a motor of the pump. By controlling the rotational speed, etc. of the pump by the variable speed mechanism, it is possible to adjust properly the pressure in the permeation space of the membrane separation device 20.

The permeated fluid discharge passage 72 may be further provided with a heat exchanger for cooling the permeated fluid S1. The heat exchanger can condense the permeated fluid S1 that is gaseous. The heat exchanger is, for example, a gas-liquid heat exchanger that causes heat exchange between a cooling medium, such as an antifreeze, and the permeated fluid S1 that is gaseous. The heat exchanger may be positioned between the membrane separation device 20 and the decompression device 52 (upstream of the decompression device 52), or between the decompression device 52 and a recovery unit 40 (downstream of the decompression device 52) described later.

The membrane separation system 100 further includes a recovery unit 40. The recovery unit 40 recovers the permeated fluid S1 from the membrane separation device 20 and can, for example, store the permeated fluid S1. The recovery unit 40 is, for example, a tank that stores the permeated fluid S1. The permeated fluid discharge passage 72 is connected to an inlet 41 of the recovery unit 40.

The membrane separation system 100 may further include a controller 60 that controls each member of the membrane separation system 100. The controller 60 is, for example, a digital signal processor (DSP) including an A/D conversion circuit, an input/output circuit, an arithmetic circuit, a storage device, etc. A program for operating properly the membrane separation system 100 is stored in the controller 60.

Each passage of the membrane separation system 100 is formed of, for example, a metal or resin pipe unless otherwise noted.

EXAMPLES

Hereinafter, the present invention will be described in more detail by way of examples and a comparative example, but the present invention is not limited to these examples.

(Example 1)

First, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). Next, the coating liquid was applied to a release liner (DIAFOIL MRE38 manufactured by Mitsubishi Chemical Corporation) to form a coating film (thickness: 500 μm). Subsequently, the coating film was cured by heating at 90°C for 20 minutes to produce a separation functional layer having a thickness of 50 μm. A surface of the separation functional layer was subjected to a corona treatment. The corona treatment was performed at an output of 0.16 kW, a table travel speed of 3 m/min, and an amount of discharge of 200 W·min/$m^2$.

Next, a non-woven PET fabric was prepared as a porous support. To a surface of the porous support was applied an aqueous solution containing 0.5 wt% molecular bonding compound (N,N'-bis(2-aminoethyl)-6-(3-trihydroxysilylpropyl) amino-1,3,5-triazine-2,4-diamine manufactured by Sulfur Chemical Laboratory Inc.). The porous support was placed on the separation functional layer such that the surface treated with the aqueous solution was in contact with the separation functional layer. The resulting laminate was heated at 90°C for 10 minutes. The surface of the porous support and the silicone resin included in the separation functional layer were thereby bonded to each other via the molecular bonding compound. The release liner was removed to give a pervaporation membrane of Example 1.

(Example 2)

First, a laminate composed of a fine porous layer made of polysulfone and a non-woven fabric made of PET was prepared as a porous support. Next, 50 g of a silicone resin composition (KE-1935B manufactured by Shin-Etsu Chemical Co., Ltd.) was added to 50 g of a silicone resin composition (KE-1935A manufactured by Shin-Etsu Chemical Co., Ltd.) to produce a coating liquid (addition type silicone resin composition). This coating liquid was of a solvent-free type which is free of a solvent. The coating liquid was applied to the fine porous layer of the porous support to form a coating film (thickness: 70 μm).

Subsequently, the coating film was cured by heating at 150°C for 10 minutes to produce a separation functional layer having a thickness of 50 μm. A pervaporation membrane of Example 2 was obtained in this manner.

(Example 3)

First, RS-50 (a laminate composed of a fine porous PVDF layer and a non-woven PET fabric) manufactured by Nitto Denko Corporation was prepared as a porous support. Next, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). This coating liquid was applied to the fine porous layer of the porous support to form a coating film (thickness: 500 μm).

Subsequently, the coating film was cured by heating at 90°C for 20 minutes to produce a separation functional layer having a thickness of 50 μm. A pervaporation membrane of Example 3 was obtained in this manner.

(Example 4)

First, 1.8 g of a silica filler (AEROSIL RX 200 manufactured by Nippon Aerosil Co., Ltd.) was added to 18.2 g of 2-ethylhexyl acrylate (2EHA manufactured by TOAGOSEI CO., LTD.), followed by stirring (2000 rpm, 3 minutes) and defoaming (2200 rpm, 1 minute) with Awatori Rentaro manufactured by Thinky Corporation. Next, 0.017 g of 1,6-hexanediol diacrylate (manufactured by OSAKA ORGANIC CHEMICAL INDUSTRY LTD.) as a crosslinking agent was added, followed by stirring (2000 rpm, 1 minute) and defoaming (2200 rpm, 1 minute). Furthermore, 0.017 g of 1-hydroxycyclohexyl-phenylketone (Omnirad 184 manufactured by IGM Resins B.V.) as a photopolymerization initiator was added, followed by stirring (2000 rpm, 3 minutes) and defoaming (2200 rpm, 1 minute) to produce a coating liquid (acrylic resin composition).

Next, a coating film sandwiched between two release liners (DIAFOIL MRE38 and DIAFOIL MRF38 manufactured by Mitsubishi Chemical Corporation) was produced by applying the coating liquid between the two release liners. The application of the coating liquid was performed using an applicator so that the coating film would have a thickness of approximately 20 μm. Then, the coating film was cured by UV irradiation of one (MRF38) of the release liners to produce a separation functional layer. The UV irradiation was performed using a blacklight at an illumination of 2.5 $mW/cm^2$ and an amount of discharge of 2400 $mJ/cm^2$ for an illumination time of 16 minutes. The distance between the blacklight and the surface of the coating film was adjusted to 30 mm.

After the production of the separation functional layer, one (MRE38) of the release liners was peeled off to expose a surface of the separation functional layer. The exposed surface of the separation functional layer was stacked on a porous support, and a 2 kg roller was moved back and forth once to press-bond these. A stretched porous PTFE membrane (NTF1122 manufactured by Nitto Denko Corporation) was used as the porous support. Subsequently, the other release liner (MRF38) was removed to give a pervaporation membrane of Example 4.

(Example 5)

A pervaporation membrane of Example 5 was obtained in the same manner as in Example 4, except that RS-50 (a laminate composed of a fine porous PVDF layer and a non-woven PET fabric) manufactured by Nitto Denko Corporation was used as a porous support and that the surface of the porous support on the fine porous PVDF layer side was stacked on the separation functional layer.

[Garley permeability]

For each porous support used to produce the pervaporation membrane, the Garley permeability was measured by a method in accordance with Method B (Gurley method) of gas permeability measurement specified in JIS L 1096: 2010.

[Opening rate]

For each porous support used to produce the pervaporation membrane, the opening rate R1 on the surface A1 facing the separation functional layer and the opening rate R2 on the surface A2 facing the surface A1 were measured by the above method.

[Average diameter]

For each porous support used to produce the pervaporation membrane, the average diameter L1 of opening portions on the surface A1 facing the separation functional layer and the average diameter L2 of opening portions on the surface A2 facing the surface A1 were determined by the above method.

[Peeling strength]

Each pervaporation membrane produced was subjected to the test above to measure the peeling strength. As a tensile tester was used Autograph AGS-50NX manufactured by Shimadzu Corporation. As for Example 1, the separation functional layer was fixed sufficiently firmly to the porous support and thus could not be peeled off the porous support by hand; the separation functional layer was broken by attempting to forcibly peel the separation functional layer off. Therefore, for Example 1, the strength at break of the separation functional layer was determined by the above method. As described above, the peeling strength can be considered a value equal to or greater than the strength at break.

The separation functional layers of the pervaporation membranes of Examples 4 and 5 were so soft that it was difficult to directly grip the separation functional layers with chucks. Hence, the peeling strengths of the pervaporation membranes of Examples 4 and 5 were measured by the above method using evaluation sheets (PET films).

[PV performance]

For each pervaporation membrane produced, the separation factor α for n-butanol (BuOH) with respect to water was measured by the following method. First, the pervaporation membrane was cut to a diameter of 74 mm to give a test piece being a flat membrane. The test piece was set in a batch-type membrane separation device (cell). A liquid mixture consisting of n-butanol (BuOH) and water was supplied to a feed space of the cell. The content of BuOH in the liquid mixture was 1.0 wt%.

Next, the cell was immersed in a water bath, and the temperature of the liquid mixture was adjusted at 30°C. Then, the pressure in the permeation space was reduced to 15 hPa while the liquid mixture was being stirred using a stirrer in the cell. Consequently, the liquid mixture permeated through the pervaporation membrane, and a gaseous permeated fluid

was obtained. Using a liquid nitrogen cold trap, the gaseous permeated fluid was cooled to be condensed. The composition of the liquid permeated fluid was analyzed by gas chromatography, and the separation coefficient α and the flux (kg/$m^2$/hr) of BuOH having permeated through the pervaporation membrane were calculated from the analysis result.

[Table 1]

| | Separation functional layer | | Porous support | | | | | | Peeling strength [N/20mm] | PV performance | |
|---|---|---|---|---|---|---|---|---|---|---|---|
| | Silicone resin composition | Curing reaction | Substrate | Garley permeability [sec/100 mL] | Opening rate [%] | | Average diameter of opening portions [μm] | | | Separation factor α | Flux of BuOH [kg/m$^2$/hr] |
| | | | | | Surface A1 | Surface A2 | Surface A1 | Surface A2 | | | |
| Ex. 1 | KS847T | Addition | Non-woven PET fabric | 2 | 6 | 11 | 15.6 | 17.2 | 1 (*1) | 23.2 | 0.0084 |
| Ex. 2 | KE1935 | Addition | Fine porous polysulfone layer<br>Non-woven PET fabric | 118 | 25 | 9 | 0.11 | 22.4 | 0.74 | 20.3 | 0.0049 |
| Ex. 3 | KS847T | Addition | Fine porous PVDF layer<br>Non-woven PET fabric | 334 | 7 | 8 | 0.07 | 17.4 | 0.1 | 20.2 | 0.0063 |

(*1) Strength at break of separation functional layer

[Table 2]

| | Separation functional layer | | Porous support | | | | | | Peeling strength [N/20 mm] | PV performance | |
|---|---|---|---|---|---|---|---|---|---|---|---|
| | Acrylic resin composition | Curing reaction | Substrate | Garley permeability [sec/100 mL] | Opening rate [%] | | Average diameter of opening portions [μm] | | | Separation factor α | Flux of BuOH [kg/m²/hr] |
| | | | | | Surface A1 | Surface A2 | Surface A1 | Surface A2 | | | |
| Ex. 4 | Acrylic monomer + Silica filler (RX200) | UV-curable | Stretched porous PTFE membrane | 30 | 49.4 | 49.4 | 1.070 | 1.070 | 1.1 | 25.9 | 0.0055 |
| Ex. 5 | Acrylic monomer + Silica filler (RX200) | UV-curable | Fine porous PVDF layer Non-woven PET fabric | 334 | 7 | 8 | 0.070 | 17.4 | 11.3 | 18.6 | 0.0047 |

See below for the abbreviations in Tables 1 and 2.

KS847T: Silicone resin composition (KS-847T manufactured by Shin-Etsu Chemical Co., Ltd.)

KE1935: Silicone resin composition (KE-1935 manufactured by Shin-Etsu Chemical Co., Ltd.)

RX200: Silica filler (AEROSIL RX 200 manufactured by Nippon Aerosil Co., Ltd.; surface modifying group: trimethylsilyl (TMS) group)

As can be seen from Table 1, for Example 1, the average diameter L1 of the opening portions on the surface A1, which faces the separation functional layer, of the porous support was 0.5 μm or more. Furthermore, the peeling strength between the separation functional layer and the porous support was 0.15 N/20 mm or more. The PV performance of the pervaporation membrane of Example 1 was better than those of Examples 2 and 3.

Moreover, as can be seen from Table 2, for Example 4, the average diameter L1 of the opening portions on the surface A1, which faces the separation functional layer, of the porous support was 0.5 μm or more. Furthermore, the peeling strength between the separation functional layer and the porous support was 0.15 N/20 mm or more. The PV performance of the pervaporation membrane of Example 4 was better than that of Example 5.

INDUSTRIAL APPLICABILITY

The pervaporation membrane of the present embodiment is suitable for separating a volatile organic compound from an aqueous solution containing the organic compound.

## Claims

**1.** A pervaporation membrane comprising:

a separation functional layer; and
a porous support supporting the separation functional layer, wherein
the porous support has a surface A1 facing the separation functional layer, the surface A1 including a plurality of opening portions H1,
an average diameter L1 of the opening portions H1 is 0.5 μm or more, and
a peeling strength measured by a test below is 0.15 N/20 mm or more.
Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.

**2.** The pervaporation membrane according to claim 1, wherein

the porous support has a surface A2 facing the surface A1, the surface A2 including a plurality of opening portions H2, and
an average diameter L2 of the opening portions H2 is 0.5 μm or more.

**3.** The pervaporation membrane according to claim 1, wherein the porous support is a fibrous structure.

**4.** A pervaporation membrane comprising:

a separation functional layer; and
a porous support in direct contact with the separation functional layer, the porous support supporting the separation functional layer, wherein
the porous support is a fibrous structure.

**5.** The pervaporation membrane according to claim 3 or 4, wherein the fibrous structure is a non-woven fabric or a stretched porous membrane including fibrils.

**6.** The pervaporation membrane according to claim 1 or 4, wherein a gas permeability of the porous support in a thickness direction is 50 seconds/100 mL or less as expressed by an air permeation rate determined according to

Method B (Gurley method) of gas permeability measurement specified in JIS L 1096: 2010.

**7.** The pervaporation membrane according to claim 1 or 4, wherein the separation functional layer includes a silicone resin.

**8.** The pervaporation membrane according to claim 7, wherein

the porous support has a surface A1 facing the separation functional layer, the surface A1 being treated with a molecular bonding agent, and
the molecular bonding agent includes a compound including a reactive group F1 capable of reacting with the surface A1 and a reactive group F2 capable of reacting with the silicone resin included in the separation functional layer.

**9.** The pervaporation membrane according to claim 1 or 4, wherein the separation functional layer includes a (meth) acrylic resin.

**10.** The pervaporation membrane according to claim 1 or 4, wherein the separation functional layer includes a filler.

**11.** The pervaporation membrane according to claim 10, wherein the filler includes at least one selected from the group consisting of zeolite and silica.

**12.** The pervaporation membrane according to claim 1 or 4 configured to be used to separate a volatile organic compound from an aqueous solution containing the organic compound.

**13.** The pervaporation membrane according to claim 12, wherein the organic compound is a fermented product generated by a microorganism.

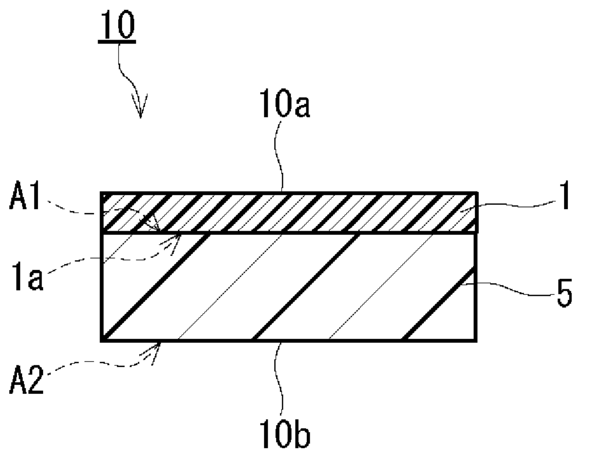


FIG.1A

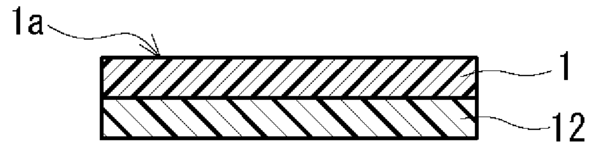


FIG.1B

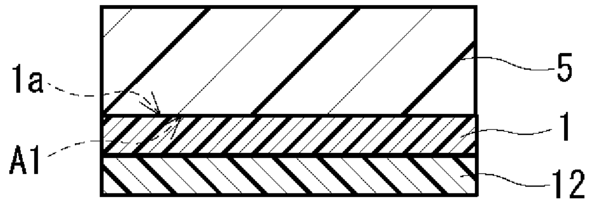


FIG.1C

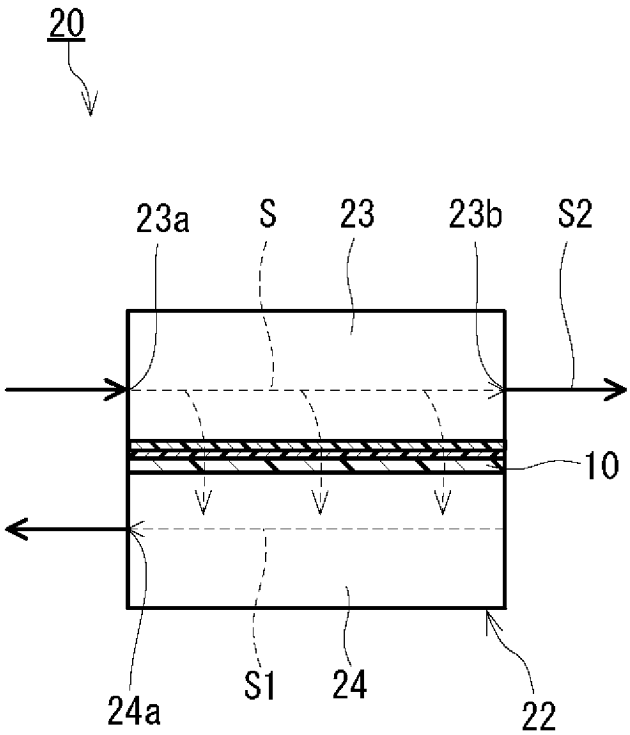


FIG.2

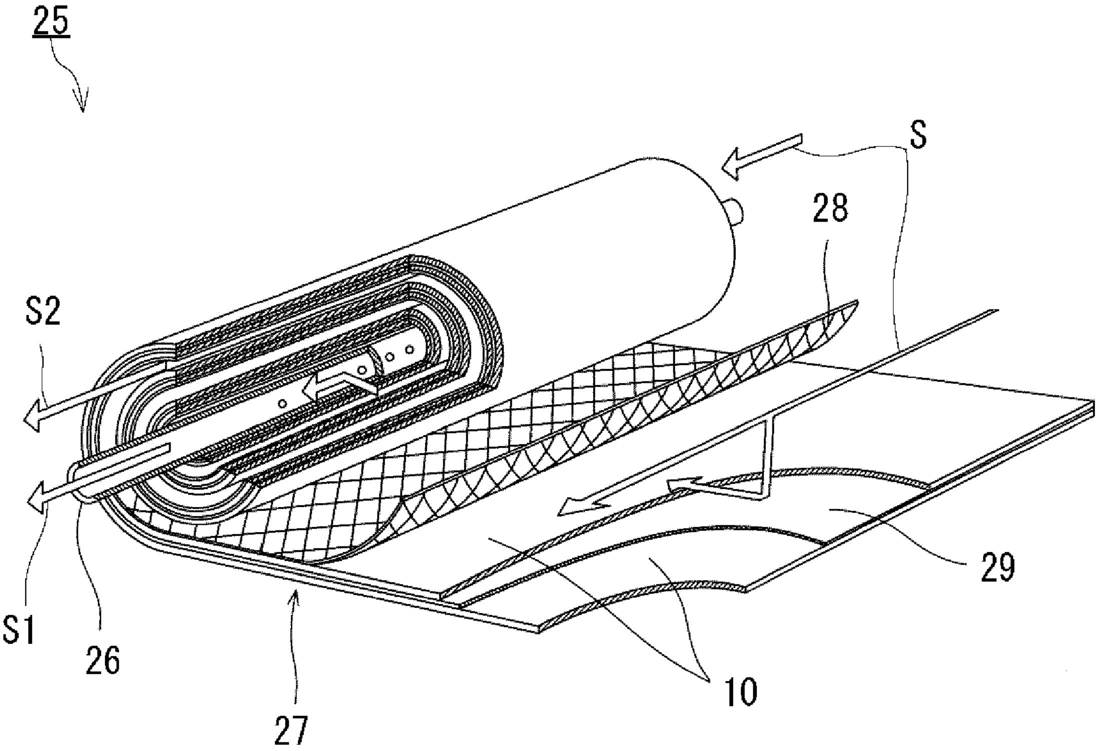


FIG.3

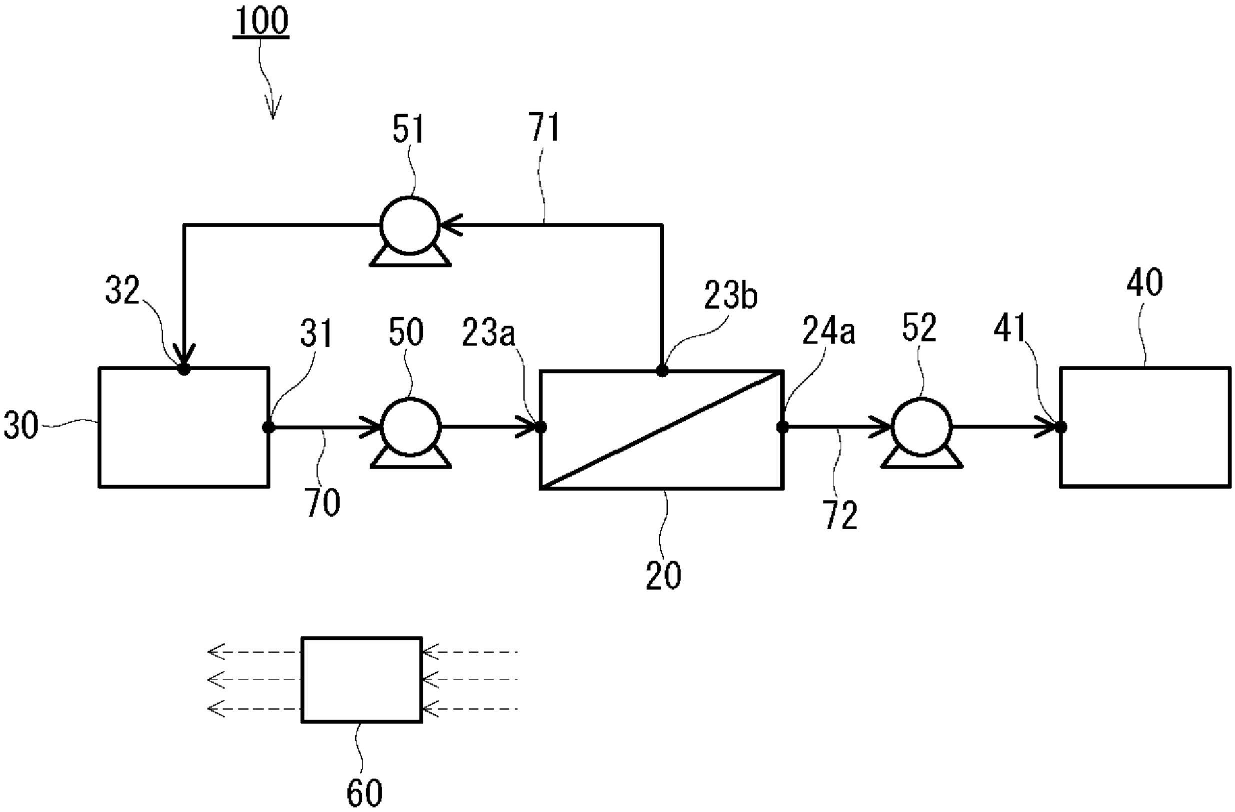


FIG.4

## INTERNATIONAL SEARCH REPORT

International application No.
**PCT/JP2023/030397**

### A. CLASSIFICATION OF SUBJECT MATTER

***B01D 61/36***(2006.01)i; ***B01D 69/10***(2006.01)i; ***B01D 69/12***(2006.01)i; ***B01D 71/44***(2006.01)i; ***B01D 71/70***(2006.01)i
FI: B01D61/36; B01D69/10; B01D69/12; B01D71/44; B01D71/70

According to International Patent Classification (IPC) or to both national classification and IPC

### B. FIELDS SEARCHED

Minimum documentation searched (classification system followed by classification symbols)

B01D61/36; B01D69/10; B01D69/12; B01D71/44; B01D71/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 8-24604 A (ASAHI GLASS CO LTD) 30 January 1996 (1996-01-30) claims, paragraphs [0021], [0023] | 4-7, 12 |
| Y | | 1-3, 5-13 |
| X | WO 2014/115687 A1 (SUMITOMO BAKELITE COMPANY LIMITED) 31 July 2014 (2014-07-31) claims, paragraphs [0051], [0059]-[0061], [0082]-[0084], examples | 4-5, 7, 9-12 |
| Y | | 1-3, 5-12 |
| X | JP 57-136905 A (KURARAY KK) 24 August 1982 (1982-08-24) claims, p. 2, upper right column, lines 10-17, examples | 4-5, 7, 12 |
| Y | | 1-3, 5-13 |
| Y | JP 2018-23955 A (SEIREN CO LTD) 15 February 2018 (2018-02-15) claims, paragraphs [0015]-[0016], [0041]-[0042], [0051], examples, fig. 1 | 1-3, 5-13 |
| Y | JP 2006-150323 A (JAPAN GORE TEX INC) 15 June 2006 (2006-06-15) paragraph [0030] | 6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2023** | **17 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/030397**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-94501 A (DAICEL CORP) 22 May 2014 (2014-05-22) paragraphs [0031], [0034]-[0038] | 8 |
| Y | JP 62-286503 A (SUMITOMO ELECTRIC IND LTD) 12 December 1987 (1987-12-12) claims, p. 3, upper right column, line 19 to lower left column, line 3 | 8 |
| Y | JP 63-116705 A (G F T G FUR TORENTEHINIKU MBH) 21 May 1988 (1988-05-21) claims, p. 5, lower right column, lines 3-6 | 10-11, 13 |
| Y | JP 2005-87882 A (NATIONAL INSTITUTE OF ADVANCED INDUSTRIAL & TECHNOLOGY) 07 April 2005 (2005-04-07) claims | 13 |

Form PCT/ISA/210 (second sheet) (January 2015)

**INTERNATIONAL SEARCH REPORT**
**Information on patent family members**

International application No.
**PCT/JP2023/030397**

| Patent document cited in search report | Publication date (day/month/year) | Patent family member(s) | Publication date (day/month/year) |
|---|---|---|---|
| JP 8-24604 A | 30 January 1996 | (Family: none) | |
| WO 2014/115687 A1 | 31 July 2014 | US 2015/0367292 A1<br>claims, paragraphs [0061], [0069]-[0072], [0093]-[0096], examples<br>EP 2949385 A1<br>CN 104936685 A | |
| JP 57-136905 A | 24 August 1982 | (Family: none) | |
| JP 2018-23955 A | 15 February 2018 | (Family: none) | |
| JP 2006-150323 A | 15 June 2006 | US 2006/0090650 A1<br>paragraph [0037]<br>EP 1652663 A2 | |
| JP 2014-94501 A | 22 May 2014 | (Family: none) | |
| JP 62-286503 A | 12 December 1987 | (Family: none) | |
| JP 63-116705 A | 21 May 1988 | US 4925562 A<br>claims, column 5, lines 58-65<br>EP 254758 A1 | |
| JP 2005-87882 A | 07 April 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005525224 A


### Non-patent literature cited in the description


- Hansen Solubility Parameters; A Users Handbook. CRC Press, 2007